# EUROPÄISCHE PATENTANMELDUNG

(11) **EP 3 879 597 A1**
(43) Veröffentlichungstag der Anmeldung: **15.09.2021**
(21) Anmeldenummer: 21157728.3
(22) Anmeldetag: 17.02.2021
(51) Int. Cl.: H01M 4/04, H01M 4/139

(54) **VERFAHREN ZUR BEARBEITUNG EINER ELEKTRODENBAHN UND BEARBEITUNGSVORRICHTUNG HIERFÜR**

(30) Priorität: 11.03.2020 DE 102020203092; 10.11.2020 DE 102020214087
(71) Anmelder: VOLKSWAGEN AG, 38440 Wolfsburg (DE)
(72) Erfinder: JAMADAR, Kartik, 38442 Wolfsburg (DE); THEUERKAUF, Christian, 38114 Braunschweig (DE)
(74) Vertreter: FDST Patentanwälte

(57) **Zusammenfassung**

Es wird ein Verfahren zur Bearbeitung einer Elektrodenbahn (4) angegeben, wobei die Elektrodenbahn (4) eine Trägerschicht (6) aufweist und ein Elektrodenmaterial (8), welches lediglich in einem Materialbereich (10) der Elektrodenbahn (4) auf die Trägerschicht (6) aufgetragen ist, sodass ein Freibereich (12) verbleibt, welcher frei ist von Elektrodenmaterial (8), zur Ausbildung von Ableitern (14), wobei die Elektrodenbahn (4) in einer Förderrichtung (F) durch eine Bearbeitungsvorrichtung (2) geführt wird, sodass der Materialbereich (10) und der Freibereich (12) nebeneinander verlaufen, wobei die Bearbeitungsvorrichtung (2) einen Kalander (20) aufweist, durch welchen die Elektrodenbahn (4) geführt wird und mit welchem der Materialbereich (10) kalandriert wird, wobei die Bearbeitungsvorrichtung (2) zusätzlich zumindest eine Walze (22a - i) aufweist, welche derart ausgebildet ist, dass diese auf die Elektrodenbahn (4) eine Querzugspannung (F4) ausübt. Weiter wird eine entsprechende Bearbeitungsvorrichtung (2) angegeben.

## Beschreibung

Die Erfindung betrifft Verfahren zur Bearbeitung einer Elektrodenbahn sowie eine hierfür geeignete Bearbeitungsvorrichtung.

Eine Elektrodenbahn wird zur Herstellung einer Batterie verwendet, d.h. zur Herstellung eines elektro-chemischen Energiespeichers. Die Batterie ist beispielsweise eine Li-Ionen-Batterie, welche als elektrischer Energiespeicher in einem Elektro- oder Hybridfahrzeug zur Versorgung eines elektrischen Antriebsstrangs ebenjenes Fahrzeugs verwendet wird.

Die Elektrodenbahn dient als Ausgangspunkt zur Herstellung von Elektroden der Batterie. Entsprechend ist die Elektrodenbahn zur Herstellung von Anoden oder Kathoden ausgebildet und besteht je nach Art der Elektrode aus entsprechenden Werkstoffen. Generell weist eine Elektrodenbahn eine Trägerschicht auf, beispielsweise aus Kupfer im Falle einer Anode und aus Aluminium im Falle einer Kathode. Auf die Trägerschicht ist einseitig oder beidseitig ein Elektrodenmaterial aufgetragen, beispielsweise ein Gemisch mit Lithium als Aktivmaterial im Falle einer Kathode und ein Gemisch mit Graphit als Aktivmaterial im Falle einer Anode. Dem jeweiligen Gemisch sind typsicherweise weitere Materialien wie z.B. Binder, Lösungsmittel, Leitruß oder sonstige Additive beigemischt.

Die Kombination von Trägerschicht und Elektrodenmaterial ergibt eine Elektrodenbahn, aus welcher nachfolgend mehrere Elektroden hergestellt werden. Eine einzelne Elektrodenbahn wird beispielsweise aufgerollt als Rolle bereitgestellt, über einen Abwickler abgewickelt und einer Bearbeitungsvorrichtung zur weiteren Bearbeitung zugeführt.

Die DE WO 2019/174844 A1 beschreibt ein Verfahren zum Herstellen einer Elektrodenfolie. Dabei wird eine Elektrodenfolie mittels zweier Kalander kalandriert und anschließend wird ein Teil einer Ableiterfolie der Elektrodenfolie mittels Laserstrahlung abgetrennt.

Die DE 10 2017 218 137 A1 beschreibt ein Verfahren zur Herstellung einer Elektrodenanordnung. Die DE 10 2012 005 229 A1 beschreibt ein Verfahren zum Herstellen einer Batteriezelle. Vor diesem Hintergrund ist es eine Aufgabe der Erfindung, die Bearbeitung einer Elektrodenbahn zu verbessern. Hierzu sollen ein entsprechendes Verfahren sowie eine entsprechende Bearbeitungsvorrichtung angegeben werden.

Die Aufgabe wird erfindungsgemäß gelöst durch ein Verfahren mit den Merkmalen gemäß Anspruch 1 sowie durch eine Bearbeitungsvorrichtung mit den Merkmalen gemäß Anspruch 13. Vorteilhafte Ausgestaltungen, Weiterbildungen und Varianten sind Gegenstand der Unteransprüche. Die Ausführungen im Zusammenhang mit dem Verfahren gelten sinngemäß auch für die Bearbeitungsvorrichtung und umgekehrt. Sofern nachfolgend Verfahrensschritte des Verfahrens beschrieben werden, ergeben sich vorteilhafte Ausgestaltungen für die Bearbeitungsvorrichtung insbesondere dadurch, dass diese ausgebildet ist, einen oder mehrere dieser Verfahrensschritte auszuführen. Sofern nachfolgend einzelne Teile, speziell Walzen beschrieben sind, sind diese vorzugsweise Teile der Bearbeitungsvorrichtung.

Das Verfahren dient zur Bearbeitung einer Elektrodenbahn, insbesondere einer Elektrodenbahn für eine Batterie. Die Elektrodenbahn wird auch als Elektrodenfolie bezeichnet. Die Elektrodenbahn weist eine Trägerschicht auf und ein Elektrodenmaterial, welches lediglich in einem Materialbereich der Elektrodenbahn auf die Trägerschicht aufgetragen ist, sodass ein Freibereich verbleibt, welcher frei ist von Elektrodenmaterial, zur Ausbildung von Ableitern. Die Elektrodenbahn dient als Halbzeug und als Ausgangspunkt für die Herstellung einzelner Elektroden, z.B. für eine prismatische Zelle, eine Rundzelle oder eine Pouch-Zelle. Insofern findet das Verfahren insbesondere Anwendung bei der Herstellung von Elektroden. Die Ableiter dienen bei der fertigen Elektrode zu deren Kontaktierung z.B. mit einer Leitung oder mit anderen Elektroden. Der Materialbereich wird auch als aktiver Bereich bezeichnet, da dieser das elektro-chemisch aktive Elektrodenmaterial aufweist. Der Freibereich wird auch als Ableiterbereich bezeichnet, da aus diesem die Ableiter zur Kontaktierung und zur Führung von Strom von oder zu der Elektrode ausgebildet werden. Die Elektrodenbahn wird auch allgemein als Endlosware bezeichnet, da die Elektrodenbahn typischerweise deutlich länger als breit ist und sich auf- und abrollen lässt. Eine aufgerollte Elektrodenbahn bildet eine Rolle, welche auf einfache Weise einem roll-to-roll-Verfahren zuführbar ist.

Im Rahmen des Verfahrens wird die Elektrodenbahn in einer Förderrichtung durch eine Bearbeitungsvorrichtung geführt, sodass der Materialbereich und der Freibereich nebeneinander verlaufen. Die Bearbeitungsvorrichtung wird auch als Bearbeitungsmaschine oder als Bearbeitungsanlage bezeichnet. Die Bearbeitungsvorrichtung ist in einer geeigneten Ausgestaltung eine roll-to-toll-Vorrichtung und das Verfahren insbesondere ein roll-to-roll-Verfahren. Die Elektrodenbahn wird vorzugsweise von einem Abwickler der Bearbeitungsvorrichtung abgerollt oder alternativ bereits als abgerollte Bahn z.B. von einer entlang einer Fertigungsstraße vorgeschalteten Vorrichtung an die Bearbeitungsvorrichtung weitergegeben. Die Förderrichtung entspricht einer Längsrichtung der Elektrodenbahn. Quer, d.h. insbesondere senkrecht, zur Längsrichtung verläuft eine Querrichtung. Die Elektrodenbahn liegt in einer Ebene, welche durch die Längsrichtung und die Querrichtung aufgespannt wird. Beim Durchlaufen der Bearbeitungsvorrichtung während des Verfahrens wird die Elektrodenfolie möglicherweise einmal oder mehrmals umgelenkt, sodass entsprechend auch die Ebene und die Förderrichtung umgelenkt werden. Der Materialbereich und der Freibereich sind in Längsrichtung nebeneinander ausgebildet und verlaufen entsprechend in Förderrichtung nebeneinander. Der Freibereich und der Materialbereich grenzen insbesondere unmittelbar aneinander an, d.h. dort, wo das Elektrodenmaterial auf der Trägerschicht endet und einen Rand bildet, beginnt direkt der Freibereich. Der Freibereich zeichnet sich insbesondere dadurch aus, dass dieser dünner ist als der Materialbereich, da in diesem ja das zusätzliche Elektrodenmaterial aufgetragen ist.

In Längsrichtung gemessen ist die Elektrodenbahn beispielsweise mehrere 100 m lang. Die Elektrodenbahn weist senkrecht zur Längsrichtung gemessen vorzugsweise eine Breite im Bereich von 10 cm bis 150 cm auf. Der Freibereich weist senkrecht zur Längsrichtung gemessen vorzugsweise eine Breite auf, welche zwischen 5 mm und 50 mm beträgt. Der Materialbereich nimmt die verbleibende Breite ein. Besonders bevorzugt ist eine Ausgestaltung, bei welcher ein einzelner Materialbereich mittig zwischen zwei seitlichen Freibereichen verläuft, wobei die Freibereiche vorzugsweise auch Randbereiche der Elektrodenbahn bilden. Alternativ sind mehrere Materialbereiche senkrecht zur Längsrichtung abwechselnd mit mehreren Freibereichen angeordnet. Nachfolgend wird ohne Beschränkung der Allgemeinheit von einer Elektrodenbahn mit einem Materialbereich ausgegangen, welcher beidseitig von zwei Freibereichen berandet ist. Die Ausführungen gelten aber analog auch für andere Geometrien.

Die Trägerschicht besteht vorzugsweise aus einem Metall, besonders bevorzugt aus Aluminium oder Kupfer. Die Trägerschicht weist vorzugsweise eine Dicke im Bereich von 5 µm bis 20 µm auf. Im Freibereich entspricht die Dicke der Elektrodenbahn insbesondere der Dicke der Trägerschicht, da hier keine weiteren Materialien vorhanden sind. Das Elektrodenmaterial besteht in einer geeigneten Ausgestaltung aus einem Gemisch mit Lithium oder Graphit als Aktivmaterial. Das Aktivmaterial ist insbesondere abhängig vom Material der Trägerschicht ausgewählt. Dem jeweiligen Gemisch sind geeigneterweise ein oder mehrere weitere Materialien beigemischt, z.B. Binder, Lösungsmittel, Leitruß oder sonstige Additive. Das Elektrodenmaterial ist vor der Zufuhr in die Bearbeitungsvorrichtung vorzugsweise mit einer Dicke im Bereich von 50 µm bis 200 µm aufgetragen. Das Elektrodenmaterial ist vorzugsweise beidseitig auf die Trägerschicht aufgetragen, sodass die Elektrodenbahn im Materialbereich dann eine Dicke im Bereich von 105 µm bis 420 µm aufweist. Alternativ ist das Elektrodenmaterial lediglich einseitig auf die Trägerschicht aufgetragen, sodass die Elektrodenbahn im Materialbereich dann eine Dicke im Bereich von 55 µm bis 220 µm aufweist. Nachfolgend wird ohne Beschränkung der Allgemeinheit von einer beidseitig mit Elektrodenmaterial beschichteten Trägerschicht ausgegangen. Die Ausführungen gelten aber analog auch für eine lediglich einseitig beschichtete Trägerschicht.

Die Bearbeitungsvorrichtung weist einen Kalander auf, welcher eine Bearbeitungsstufe der Bearbeitungsvorrichtung ist. Die Elektrodenbahn wird durch den Kalander geführt und mit diesem wird dann der Materialbereich kalandriert. Dadurch wird senkrecht sowohl zur Längsrichtung als auch zur Querrichtung, also senkrecht zur Ebene der Elektrodenbahn, eine Kraft ausgeübt, durch welche das Elektrodenmaterial gepresst und verdichtet wird. Vorzugsweise wird das Elektrodenmaterial um 30% bis 50% verdichtet. Durch das Pressen und Verdichten erzeugt der Kalander insbesondere Kräfte in der Ebene, d.h. in Querrichtung und/oder in Längsrichtung, da dies die einzigen verbleibenden Richtungen sind, in welche die Elektrodenbahn ausweichen kann.

Der Kalander weist wenigstens zwei oder mehr Walzen auf, welche jeweils auch als Kalanderwalze bezeichnet werden. Eine Kalanderwalze zeichnet sich dadurch aus, dass diese im Rahmen des Verfahrens an die Elektrodenbahn angepresst wird, um dadurch das Elektrodenmaterial zu verdichten. Geeigneterweise wird die Elektrodenbahn durch zwei Kalanderwalzen hindurchgeführt, welche in einem Abstand zueinander angeordnet sind, welcher geringer ist als die Dicke der Elektrodenbahn vor dem Kalander. Eine jeweilige Kalanderwalze, speziell deren Mantelfläche, welche mit dem Materialbereich in Kontakt steht, ist vorzugsweise härter als das Elektrodenmaterial und hierzu aus einem harten Material hergestellt. Unter einem harten Material wird hier und allgemein ein Material verstanden mit Härte größer als 50 HRC (d.h. Rockwell-Härte), vorzugsweise ein Metall, insbesondere Stahl, gehärteter Stahl oder Chromstahl, verstanden oder ein kohlenstofffaserverstärkter Kunststoff oder Ähnliches. Vorteilhaft ist auch eine Ausgestaltung, bei welcher die Walze mit einem harten Material, vorzugsweise Wolframcarbid, ganz oder teilweise beschichtet ist. Zweckmäßig ist auch ein mehrstufiger Kalander, bei welchem die Elektrodenbahn in Förderrichtung hintereinander durch mehrere Bearbeitungsstufen mit je insbesondere zwei Kalanderwalzen geführt wird, zum mehrstufigen Verdichten.

Vorliegend weist nun die Bearbeitungsvorrichtung zusätzlich, d.h. zusätzlich zum Kalander, zumindest eine Walze auf, welche derart ausgebildet ist, dass diese auf die Elektrodenbahn eine zusätzliche Zugspannung, bevorzugterweise zumindest eine Querzugspannung ausübt. Mittels der zusätzlichen Walze wird die Elektrodenbahn demnach zusätzlich bearbeitet, nämlich gezielt angegriffen und quergezogen, d.h. in Querrichtung gezogen. Die Walze erzeugt eine Querzugspannung, welche quer zur Förderrichtung wirkt und von der Walze in die Elektrodenbahn und speziell insbesondere in die Trägerschicht eingeleitet wird. Bevorzugterweise übt die Walze auf die Elektrodenbahn eine Querzugspannung aus, um eine Faltenbildung zu vermeiden, insbesondere eine Faltenbildung der Trägerschicht. Mit anderen Worten: während des Verfahrens übt die Walze eine Querzugsspannung auf die Elektrodenbahn aus, sodass eine Faltenbildung vermieden wird. Eine Faltenbildung ergibt sich insbesondere während des Verfahrens potentiell durch den Kalander oder durch eine andere Bearbeitungsstufe der Bearbeitungsvorrichtung.

Insbesondere dient die Walze nicht oder nicht lediglich dazu, die Elektrodenbahn in Förderrichtung zu fördern. Zum Fördern der Elektrodenfolie durch die Bearbeitungsvorrichtung weist diese zweckmäßigerweise für die Elektrodenfolie einen Abwickler und einen Aufwickler auf, welche in Förderrichtung eine Bahnspannung auf die Elektrodenfolie ausüben.

Vorzugsweise weist die Bearbeitungsvorrichtung mehrere zusätzliche Walzen zur Bearbeitung der Trägerschicht auf, wobei dann die Walzen nicht zwingend gleichartig ausgebildet sind. Die Walze ist allgemein insbesondere zylinderförmig und erstreckt sich entlang einer Drehachse, um welche die Walze insbesondere rotationssymmetrisch ist. Die Walze ist entweder in Förderrichtung vor oder hinter dem Kalander angeordnet und ist dann ein Teil einer hierzu separaten Bearbeitungsstufe. Alternativ ist die Walze innerhalb des Kalanders angeordnet, geeigneterweise in Förderrichtung zwischen zwei Bearbeitungsstufen eines mehrstufigen Kalanders. Alternativ ist die Walze innerhalb des Kalanders senkrecht zur Förderrichtung neben einer Kalanderwalze derart angeordnet, dass die Walze und die Kalanderwalze eine gemeinsame Drehachse aufweisen und dann unterschiedliche Längsbereiche der Elektrodenbahn gleichzeitig unterschiedlich bearbeitet werden. Die zusätzliche Walze ist insbesondere keine Kalander-walze. Vorzugsweise dient die zusätzliche Walze vorrangig oder ausschließlich zur Einwirkung auf die Trägerschicht und nicht zwingend zur Bearbeitung des Elektrodenmaterials, dieses wird jedoch je nach Anordnung und Funktionalität der Walze relativ zur Elektrodenbahn unter Umständen auch von der Walze bearbeitet.

Ein Ausgangspunkt der Erfindung ist insbesondere die Beobachtung, dass beim Kalandrieren der Elektrodenbahn die Gefahr einer Bildung von Falten besteht, was negative Auswirkungen auf die Qualität der Elektrodenbahn hat. Die Bildung von Falten ist insbesondere abhängig von der Stärke einer Bahnspannung während der Bearbeitung, welche in Förderrichtung insbesondere durch einen Abwickler und einen Aufwickler für die Elektrodenbahn entsteht. Mit zunehmender Bahnspannung steigt auch die Gefahr einer Faltenbildung. Zusätzlich besteht eine Gefahr einer Faltenbildung zuweilen auch aufgrund des Kalanders, welcher durch das Pressen und Verdichten senkrecht zur Ebene entsprechende Kräfte in Querrichtung und/oder in Längsrichtung erzeugt.

Eine Faltenbildung lässt sich beispielsweise vermeiden, indem die Trägerschicht in Förderrichtung lediglich abschnittsweise mit Elektrodenmaterial beschichtet wird, sodass sich eine intermittierend beschichtete Elektrodenbahn ergibt, mit Freibereichen, welche sich quer zur Längsrichtung erstrecken, zusätzlich zu weiteren, seitlichen Freibereichen, welche jeweils einen Außenrand bilden. Die gesamte Elektrodenbahn wird auch als Muttercoil bezeichnet und beispielsweise zunächst längsgeschnitten, um die Außenränder zu entfernen, danach in einem Kalander kalandriert und anschließend nochmals z.B. mittig längsgeschnitten, um mehrere parallel verlaufende Teilbahnen zu erhalten, welche jeweils auch als Tochtercoil bezeichnet werden. Das jeweilige Längsschneiden wird auch als "Schlitzen" oder Englisch "Slitten" bezeichnet und stellt eine zusätzliche Schneidoperation dar, welche mittels eines Slitters als eine Bearbeitungsstufe durchgeführt wird. Abschließend wird eine jeweilige Teilbahn dann quergeschnitten und dadurch in Längsabschnitte zerteilt, um einzelne Elektroden zu erhalten. Kalandern und Schlitzen erfolgen beispielsweise auf zwei unterschiedlichen Anlagen und somit in mehreren Bearbeitungsstufen derart getrennt voneinander, dass die Elektrodenbahn zwischen zwei Bearbeitungsschritten jeweils auf- und wieder abgerollt wird, wodurch sich nachteilige Eigenspannungen im Material bilden. Während einer Erwärmung, z.B. im Rahmen des Kalandrierens, werden diese Spannungen gelöst, wodurch üblicherweise Falten entstehen. Bei einer kontinuierlich beschichteten Elektrodenbahn lässt sich die Faltenbildung verringern, indem im Kalander die Elektrodenbahn erwärmt wird und in Kombination mit der Bahnspannung in Längsrichtung etwaige faltengefährdete Bereiche der Elektrodenbahn plastisch verformt werden. Die beschriebene Erwärmung und plastische Verformung haben aber auch eine entsprechende Wärmeentwicklung und Kaltverfestigung speziell der Trägerschicht zur Folge, was nachteilig zu einer erhöhten Oxidation führen kann und potentiell die Schweißbarkeit der Trägerschicht verschlechtert.

Eine kontinuierlich beschichtete Elektrodenbahn weist im Gegensatz zu einer intermittierend beschichteten Elektrodenbahn einen in Längsrichtung durchgängig ausgebildeten Materialbereich auf und somit in Längsrichtung durchgängig aufgetragenes Elektrodenmaterial. Während bei einer intermittierend beschichteten Elektrodenbahn die Ableiter insbesondere zwischen zwei in Längsrichtung aufeinanderfolgenden Materialbereichen ausgebildet werden, werden bei einer kontinuierlich beschichteten Elektrodenbahn die Ableiter seitlich am Materialbereich ausgebildet.

Das Problem einer Faltenbildung beim Kalandrieren soll nachfolgend genauer erläutert werden. Ausgangspunkt ist die Tatsache, dass die Elektrodenbahn quer zur Längsrichtung betrachtet eine unterschiedliche Dicke aufweist, da das Elektrodenmaterial nur über eine Teilbreite aufgetragen ist. Zwei gedachte Volumenelemente der Elektrodenbahn im Materialbereich und im Freibereich werden daher unterschiedlich mit Kräften beaufschlagt. Im Freibereich wirkt zunächst in Längsrichtung die Bahnspannung als eine Zugspannung. Senkrecht auf die Elektrodenbahn, also senkrecht sowohl zur Längs- als auch zur Querrichtung wirkt eine Druckspannung des Kalanders, allerdings nur im Materialbereich, da dieser dicker ist. Im Freibereich wirkt also senkrecht zur Elektrodenbahn keine Kraft. Die Zugspannung in Längsrichtung erzeugt somit eine Druckspannung in Querrichtung, d.h. eine negative Dehnung, welche die seitlichen Freibereiche zur Mitte hin zieht. Im Materialbereich ist die Situation dagegen eine andere. Die Bahnspannung wirkt hier zwar ebenso, hinzu kommt jedoch im Kalander die Druckspannung, d.h. negative Dehnung, welche die Bahnspannung typischerweise überwiegt, sodass eine zusätzliche positive Dehnung in Querrichtung erzeugt wird, welche den Materialbereich seitlich nach außen treibt. Im Ergebnis werden also die seitlichen Freibereiche zum Materialbereich hin getrieben und umgekehrt der Materialbereich nach außen in Richtung der Freibereiche, sodass sich hier entsprechende Falten bilden, welche besonders in den Freibereichen sichtbar sind. Die unterschiedlich dicken Bereiche der Elektrodenbahn erfahren demnach unterschiedliche Querspannungen, also Kräfte in Querrichtung und quer zur Längsrichtung. Analog erzeugt der Kalander aufgrund der Druckspannung unter Umständen auch eine zusätzliche positive Dehnung in Längsrichtung, welche den Materialbereich dann entlang der Längsrichtung vom Kalander forttreibt, d.h. sozusagen nach vorn und hinten. Für die Freibereiche gilt dies nicht, sodass im Ergebnis der Materialbereich in Längsrichtung gestreckt wird, die Freibereiche jedoch nicht, sodass sich auch hier entsprechende Falten bilden, welche wiederum besonders in den Freibereichen sichtbar sind. Die unterschiedlich dicken Bereiche der Elektrodenbahn erfahren demnach unterschiedliche Längsspannungen, also Kräfte in Längsrichtung und quer zur Querrichtung.

Ein weiterer Ausgangspunkt der Erfindung ist insbesondere die Beobachtung, dass das Kalandrieren typischerweise langsamer erfolgt als das Schlitzen, üblicherweise mit einer halbierten Fördergeschwindigkeit. Beispielsweise erfolgt das Schlitzen mit einer Fördergeschwindigkeit von 100 m/min und das Kalandrieren mit einer Geschwindigkeit von 50 m/min. Daraus ergibt sich eine entsprechend reduzierte Auslastung des Slitters.

Ein weiterer Ausgangspunkt der Erfindung ist insbesondere die Beobachtung, dass die Elektrodenbahn im Slitter, also beim Längsschneiden, nicht in Längsrichtung gespannt wird, sodass auch keine Querspannung senkrecht zur Förderrichtung erzeugt wird und der Slitter an der Elektrodenbahn daher eine nachteilige Zugspannung erzeugt und eine Schnittkante mit einem nachteiligen Grat.

Auch das Problem der Gratbildung beim Schlitzen soll nachfolgend genauer erläutert werden. Grundsätzlich ist es möglich, zum Schlitzen eine Kombination aus zwei Messern, nämlich einem Obermesser und einem Untermesser, zu verwenden, welche auf gegenüberliegenden Seiten der Elektrodenbahn angeordnet sind, jeweils rotieren und die Elektrodenbahn scherenartig in Längsrichtung zerschneiden. Da die Messer prinzipbedingt aneinander vorbeischeren, wird beim Schneiden das Material der Elektrodenbahn zunächst zwischen die beiden Messer gezogen, d.h. in Richtung einer Schneidkante des einen Messers, sodass Falten entstehen. Im Bereich der Schneidkante entsteht zudem eine Zugspannung, welche zu einer erhöhten Gratbildung führt. Auch besteht die Gefahr, dass bei fortschreitendem Verschleiß der Messer sich das Material der Elektrodenbahn zunächst aus deren Ebene heraus nach oben oder unten in einen Schneidspalt verzieht, bevor es tatsächlich zerschnitten wird. Das Resultat ist eine ungerade Schnittkante. Aufgrund des Vorbeischerens ist auch auf der gegenüberliegenden Seite eines jeweiligen Messers diesem kein Wiederstand entgegensetzt, sodass die Elektrodenbahn entsprechend in diese Richtung unkontrolliert ausweicht und einen Grat bildet. Das Schlitzen ist somit insgesamt sehr undefiniert und erfolgt sehr unkontrolliert.

Wie bereits weiter oben angedeutet wurde, unterscheidet sich die Bearbeitung einer intermittierend beschichteten Elektrodenbahn von der Bearbeitung einer kontinuierlich beschichteten Elektrodenbahn. Ohne Beschränkung der Allgemeinheit wird für beide Fälle von einer einzelnen Muttercoil ausgegangen, welche in zwei Tochtercoils zerteilt wird, die Ausführungen gelten aber analog auch für eine einzelne Muttercoil, welche in mehr als zwei Tochtercoils zerteilt wird. Bei einer intermittierend beschichteten Elektrodenbahn wird geeigneterweise zunächst seitlich der aufeinander folgenden Materialbereiche die in Querrichtung überstehende Trägerschicht mit einem Slitter abgetrennt, d.h. nicht beschichtete Randbereiche werden in Längsrichtung abgeschnitten. Dadurch wird hier eine Faltenbildung beim nachfolgenden Kalandrieren im Kalander vermieden. Nach dem Kalandrieren wird dann die Elektrodenbahn in einem weiteren Slitter erneut längsgeschnitten, diesmal mittig, um zwei parallel verlaufende Teilbahnen als Tochtercoils zu erhalten. Eine jeweilige Tochtercoil wird anschließend genotcht und in Längsabschnitte zerteilt, um einzelne Elektroden auszubilden. Dabei werden auch aus den Freibereichen zwischen den Materialbereichen entsprechende Ableiter hergestellt. Nach dem Notchen und Zerteilen werden die einzelnen Elektroden z.B. gestapelt. Nachteilig ist insgesamt, dass die Elektrodenbahn zweimal längsgeschnitten wird, einmal vor und einmal nach dem Kalandrieren, sodass insgesamt wenigstens drei Bearbeitungsstufen notwendig sind, nämlich erstes Schlitzen, dann Kalandrieren, dann zweites Schlitzen.

Bei einer kontinuierlich beschichteten Elektrodenbahn verlaufen die Freibereiche zur Ausbildung der Ableiter seitlich des Materialbereichs, welcher sich durchgängig entlang der Längsrichtung erstreckt. Die Elektrodenbahn wird einem Kalander zugeführt und dabei erwärmt. Beispielsweise wird die Elektrodenbahn vor dem Kalander auf 150 C vorgewärmt, z.B. induktiv oder mittels eines Infrarotstrahlers, und die Kalanderwalzen weisen eine Temperatur von 170 C auf, um die Elektrodenbahn beim Hindurchführen entsprechend weiter zu erwärmen. Nach dem Kalander wird die Elektrodenbahn wieder abgekühlt, z.B. auf Raumtemperatur. Durch das Erwärmen wird das Material der Elektrodenbahn weicher und dann aufgrund der Bahnspannung plastisch umgeformt. Etwaige Falten werden dadurch vorteilhafterweise glatt gezogen und entsprechend verringert. Problematisch sind allerdings die bereits beschriebene Oxidation der Trägerschicht und die daraus resultierende, verminderte Schweißbarkeit der Ableiter sowie ein mögliches Aufschmelzen eines gegebenenfalls im Elektrodenmaterial vorhandenen Binders. Auch wird die Elektrodenbahn durch das Erwärmen duktiler, verliert Festigkeit und ist dann nachfolgend schwieriger schneidbar. Weiter stellt jegliche Erwärmung einen entsprechenden Energiebedarf dar. Nach dem Kalandrieren wird die Elektrodenbahn einem Slitter zugeführt, welcher einerseits die seitlichen Freibereiche auf die für die Ableiter nötige Breite kürzt und andererseits den Materialbereich mittig zerteilt, um zwei Teilbahnen als Tochtercoils zu erzeugen. Die endgültige Ausbildung der Ableiter erfolgt dann in einem nachfolgenden, separaten Notchen.

Aufgrund obiger Überlegungen lassen sich folgenden Nachteile bei der Bearbeitung einer Elektrodenbahn identifizieren: lange Prozesszeiten, aufwändige Handhabung der Elektrodenbahn, eine Vielzahl an separaten Bearbeitungsschritten, Gefahr von Faltenbildung beim Kalandrieren und Schlitzen, verminderte Schnittqualität beim Schlitzen vor dem Kalander in zuvor nicht verdichtetes Elektrodenmaterial, Gratbildung und Bildung eines Bruchbereichs sowie unkontrollierte Materialbewegung mit Faltenbildung beim Schlitzen.

Vorliegend werden nun durch die zumindest eine zusätzliche Walze ein oder mehrere der vorgenannten Nachteile behoben. Nachfolgend werden diverse vorteilhafte Ausgestaltungen der Walze beschrieben. Durch Kombination mehrerer oder aller dieser Ausgestaltungen ergeben sich weitere vorteilhafte Ausgestaltungen.

Zunächst ist die Elektrodenbahn vorzugsweise eine kontinuierlich beschichtete Elektrodenbahn, eine intermittierend beschichtete Elektrodenbahn wird hingegen nicht verwendet. Weiter ist die Elektrodenbahn vorzugsweise beidseitig insbesondere gleichartig beschichtet und insofern symmetrisch bezüglich der Ebene der Elektrodenbahn. Bevorzugterweise weist die Elektrodenbahn einen mittig in Längsrichtung verlaufenden Materialbereich auf, mit einer linken Seite und einer rechten Seite. Beidseitig des Materialbereichs schließt sich jeweils ein Freibereich an, welcher in Längsrichtung verläuft und welcher zur Ausbildung von Ableitern dient. Daraus ergeben sich zwei seitliche Freibereiche, welche zugleich Randbereiche der Elektrodenbahn sind. Auch die Freibereiche sind vorzugsweise kontinuierlich, d.h. durchgängig ausgebildet.

Die zusätzliche Walze rotiert um eine Drehachse senkrecht zur Förderrichtung und ist auf einer Oberseite oder einer Unterseite der Elektrodenbahn angeordnet, sodass diese über eine Mantelfläche der Walze geführt wird. Dabei wird die Walze geeigneterweise derart um deren Drehachse gedreht, dass die Mantelfläche mit der Förderrichtung dreht und die Elektrodenbahn sozusagen mitnimmt. Vorzugsweise sind die Drehachsen sämtlicher Walzen der Bearbeitungsvorrichtung parallel zueinander.

Vorliegend ist die Walze derart ausgebildet, dass diese auf die Elektrodenbahn und speziell insbesondere auf die Trägerschicht eine Querzugspannung ausübt, vorteilhafterweise um eine Faltenbildung zu vermeiden. Die Walze wird daher auch als Querzugwalze bezeichnet. Die Querzugspannung wirkt insbesondere einem oder mehreren der oben beschriebenen Effekte zur Bildung von Falten entgegen. Die Querzugspannung ist eine Kraft, welche quer, d.h. vorzugsweise senkrecht, zur Längsrichtung und somit auch zur Förderrichtung wirkt. Die Querzugspannung wirkt seitlich nach außen hin und drückt oder schiebt also die Trägerschicht ausgehend von einer Mitte der Elektrodenbahn jeweils nach außen zur Seite hin. Die Elektrodenbahn und speziell deren Trägerschicht werden vorteilhafterweise mittels der Walze in Querrichtung gestreckt oder gestrafft und sozusagen glattgezogen. Durch die Querzugspannung der zusätzlichen Walze lässt sich eine Faltenbildung beim Bearbeiten in der Bearbeitungsvorrichtung effektiv vermeiden, da mit der Querzugspannung ein zusätzlicher Parameter zur Verfügung steht, um die Kräfte, welche auf die Elektrodenbahn wirken, zu modifizieren. Die Querzugspannung lässt sich durch die konkrete Ausgestaltung der Querzugwalze bedarfsgerecht einstellen und auf den konkreten Anwendungsfall anpassen. Insbesondere ist die Querzugspannung, welche zur optimalen Vermeidung von Falten benötigt wird, abhängig von der Dicke der Elektrodenbahn im Materialbereich und dessen Verdichtung im Kalander, d.h. der Druckspannung im Kalander, aber auch abhängig von der Bahnspannung in Förderrichtung.

In einer zweckmäßigen Ausgestaltung ist die Walze derart ausgebildet, dass diese am Freibereich angreift und in diesem die Querzugspannung ausübt. Hierzu weist die Walze in Querrichtung und entlang ihrer Drehachse betrachtet unterschiedliche Querabschnitte auf, nämlich einen Außenabschnitt, welcher sich über den Freibereich erstreckt, und einen Innenabschnitt, welcher sich über den Materialbereich erstreckt. Bei einem mittigen Materialbereich mit zwei seitlichen Freibereichen weist die Walze dann entsprechend einen Innenabschnitt auf, welcher seitlich von zwei Außenabschnitten eingefasst ist. Alternativ weist die Walze lediglich einen Außenabschnitt auf und erstreckt sich in Querrichtung gerade nicht über den Materialbereich, sondern nur über den Freibereich und gegebenenfalls nach außen über diesen hinaus. Bei mehreren Freibereichen weist die Bearbeitungsvorrichtung vorzugsweise für jeden der Freibereich eine entsprechende Walze auf und diese Walzen weisen eine gemeinsame Drehachse auf. Der jeweilige Außenabschnitt greift im jeweiligen Freibereich an der Elektrodenbahn an und erzeugt hier eine Querzugspannung, wohingegen ein gegebenenfalls vorhandener Innenabschnitt höchstens eine Druckspannung auf den Materialbereich ausübt. Diese Ausgestaltung ist besonders vorteilhaft, um eine Druckspannung des Kalanders zu kompensieren, entweder innerhalb des Kalanders und als Teil desselben oder außerhalb des Kalanders, insbesondere in Förderrichtung davor.

In einer anderen zweckmäßigen Ausgestaltung ist die Walze derart ausgebildet, dass diese am Materialbereich angreift und in diesem die Querzugspannung ausübt. Hierzu weist die Walze in Querrichtung und entlang ihrer Drehachse betrachtet zwei Querabschnitte auf, nämlich einen linksseitigen Abschnitt, welcher sich ausgehend von der Mitte des Materialbereichs in Querrichtung zur einen Seite erstreckt, und einen rechtsseitigen Abschnitt, welcher sich entsprechend ausgehend von der Mitte des Materialbereichs in Querrichtung zur anderen Seite erstreckt. Die beiden Querabschnitte üben nun jeweils eine Querzugspannung in zueinander entgegengesetzter Richtung aus, sodass der Materialbereich ausgehend von der Mitte zu beiden Seiten nach außen gestreckt, geschoben oder getrieben wird. Diese Ausgestaltung ist besonders vorteilhaft, um bei einem gleichzeitigen Zertrennen der Elektrodenbahn in Längsrichtung und in mehrere Teilbahnen eine Gratbildung und Faltenbildung zu vermeiden.

Die beiden vorgenannten Ausgestaltungen lassen sich in der Bearbeitungsmaschine auch kombinieren, insbesondere indem diese zwei zusätzliche Walzen aufweist, von welchen eine wie beschrieben am Freibereich angreift und die andere wie beschrieben am Materialbereich.

Zum Ausüben der Querzugspannung weist die Walze in einer geeigneten Ausgestaltung eine Mantelfläche auf, welche ganz oder teilweise aus einem Gummi hergestellt ist, z.B. aus einem Polyurethan. Die Walze ist dann dadurch insbesondere ausgebildet, die Querzugspannung durch Reibung zu erzeugen. In Umlaufrichtung um die Walze herum ist das Gummi vorzugsweise durchgängig, d.h. unterbrechungsfrei ausgebildet. Der Begriff "Gummi" wird hier insbesondere stellvertretend für jegliches Material verwendet, welches komprimierbar ist und eine großer Reibung aufweist, insbesondere eine Reibung, welche größer ist als die von den zuvor bereits beschriebenen harten Materialien. Zweckmäßigerweise ist die Mantelfläche lediglich im jeweiligen Freibereich, d.h. insbesondere entlang des jeweiligen Außenabschnitts einer Walze aus Gummi hergestellt. Die Mantelfläche aus Gummi wird beispielsweise derart hergestellt, dass auf einen Grundkörper einer Walze aus einem insbesondere harten Material eine entsprechende Gummischicht aufgetragen wird, beispielsweise indem ein Gummiband aufgeklebt wird oder um die Walz herumgeführt wird. Die Gummischicht ist insbesondere abhängig von der Dicke des Elektrodenmaterials und ist zweckmäßigerweise dicker als das Elektrodenmaterial, um eine gewisse Kompression zu ermöglichen. Das Gummi ist insbesondere derart komprimierbar, dass dieses in radialer Richtung um 100 µm bis 500 µm, z.B. 300 µm, gestaucht wird. Beispielsweise weist die Gummischicht eine Dicke im Bereich von 2 mm bis 10 mm auf, z.B. 5 mm.

Alternativ oder zusätzlich ist die Walze in einer geeigneten Ausgestaltung derart ausgebildet, dass diese auf den Freibereich eine größere Druckspannung ausübt als auf den Materialbereich. Auch hierdurch ist die Walze dann insbesondere ausgebildet, die Querzugspannung durch Reibung zu erzeugen. Zweckmäßigerweise weist die Walze im Freibereich hierzu einen größeren Durchmesser auf als im Materialbereich, insbesondere indem ein jeweiliger Außenabschnitt einen größeren Durchmesser aufweist als der Innenabschnitt. Die Differenz der Durchmesser der Walze im Freibereich und im Materialbereich ist vorzugsweise größer als die Dicke des Elektrodenmaterials im Materialbereich.

Die beiden vorgenannten Ausgestaltungen sind vorteilhaft derart kombiniert, dass die Walze einen zylindrischen Grundkörper aufweist, welcher entlang eines jeweiligen Außenabschnitts mit Gummi, genauer einer Gummischicht, ummantelt ist, sodass sich hier eine Mantelfläche aus Gummi ergibt, während entlang des Innenabschnitts die Mantelfläche aus dem Material des Grundkörpers gebildet ist. Durch das Ummanteln mit Gummi weist ein jeweiliger Außenabschnitt automatisch auch einen größeren Durchmesser auf als der Innenabschnitt, wobei die Differenz dieser Durchmesser einer Dicke der Gummischicht entspricht.

Alternativ oder zusätzlich weist die Walze zum Ausüben der Querzugspannung in einer geeigneten Ausgestaltung eine texturierte Mantelfläche auf. Die Walze weist demnach außenumfänglich eine Textur auf, durch welche auf die Elektrodenbahn, speziell deren Trägerschicht, eine Querzugspannung erzeugt wird. Die Textur wird auch als Profil oder Struktur bezeichnet. Die texturierte Mantelfläche weist Erhebungen oder Vertiefungen oder beides auf, sodass die Reibung der Walze zumindest im Bereich der texturierten Mantelfläche entsprechend erhöht ist. Die Textur umfasst vorzugsweise eine Vielzahl an Stegen und/oder Nuten, welche zueinander parallel verlaufen und welche jeweils vorzugsweise gerade verlaufen. Die Textur, d.h. die Erhebungen und/oder Vertiefungen wie z.B. Stege und/oder Nuten, sind insbesondere in einem Anstellwinkel relativ zur Förderrichtung angestellt, sodass sich beim Drehen der Walze und deren Angreifen an der Elektrodenbahn eine entsprechende Querzugspannung ergibt. Der Anstellwinkel wird vorzugsweise derart eingestellt, dass die resultierende Querzugspannung die Kräfte durch Druckspannung im Kalander und Bahnspannung in der Bearbeitungsvorrichtung allgemein ausgleicht und dadurch eine Faltenbildung optimal verhindert. Der Anstellwinkel ist insbesondere auch abhängig von der Dicke des Elektrodenmaterials sowie der im Kalander vorgesehenen Verdichtung.

Der Anstellwinkel wird geeigneterweise dadurch eingestellt, dass aus einem Satz von Walzen mit unterschiedlich texturierter Mantelfläche eine geeignete Walze ausgewählt wird und in die Bearbeitungsvorrichtung eingesetzt wird. Alternativ ist lediglich die Gummischicht austauschbar und zum Einstellen des Anstellwinkels wird ähnlich einem Reifenwechsel lediglich die Gummischicht auf dem Grundkörper ausgetauscht. Der Anstellwinkel entspricht vorzugsweise demjenigen Winkel, in welchem die Falten verlaufen, welche erzeugt würden, wenn keine zusätzliche Querzugspannung mittels der Walze erzeugt würde. Der optimale Anstellwinkel und somit die Auswahl der konkreten Textur werden daher geeigneterweise dadurch ermittelt, dass im Rahmen einer Kalibrierung eine Elektrodenbahn ohne Querzugspannung durch die Bearbeitungsvorrichtung geführt wird und dann der Winkel der entstehenden Falten relativ zur Förderrichtung gemessen wird. Bevorzugterweise liegt der Anstellwinkel im Bereich von 5° bis 50 , besonders bevorzugt bis 15 °. Insbesondere liegt die Textur somit parallel zu den Falten, welche entstehen würden.

Die Textur ist vorzugsweise eine Mikrostruktur, d.h. etwaige Erhebungen und Vertiefungen wie z.B. Stege und Nuten, weisen lediglich geringe Abmessungen auf. In einer geeigneten Ausgestaltung weisen die Stege und/oder Nuten der texturierten Mantelfläche eine Höhe beziehungsweise Tiefe zwischen 50 µm und 1000 µm auf. In einer geeigneten Ausgestaltung weisen die Stege und/oder Nuten der texturierten Mantelfläche eine Breite zwischen 100 µm und 500 µm auf. In einer geeigneten Ausgestaltung weisen die Stege und/oder Nuten der texturierten Mantelfläche eine Länge zwischen 3000 µm und 5000 µm auf. Die Erhebungen und/oder Vertiefungen weisen eine Geometrie auf, welche nicht zwingend gerade sein muss, sondern zweckmäßigerweise angepasst ist an die Geometrie der Falten und dieser insbesondere entspricht.

Alternativ oder zusätzlich ist die Walze in einer vorteilhaften Ausgestaltung zum Ausüben der Querzugspannung schraubenförmig ausgebildet, d.h. schneckenförmig, gewindeförmig, helixförmig oder dergleichen. Die Walze weist dann eine Mantelfläche auf, mit einem Steg, welcher helixartig um die Walze herumläuft, sodass diese insgesamt schraubenförmig ausgebildet ist, wobei dann der Steg sozusagen ein Gewinde bildet. Äquivalent zu einem Steg sind eine Kante, ein Vorsprung oder dergleichen. Der Steg ist in einer geeigneten Ausgestaltung an sich ähnlich zu den oben beschriebenen Stegen der Textur, allerdings typischerweise größer und entsprechend ist bereits ein einzelner Steg ausreichend. Durch die schraubenförmige Ausgestaltung wird sozusagen eine Förderwirkung in Querrichtung erzielt, mittels welcher dann die Querzugspannung erzeugt wird. Die Elektrodenbahn wird demnach von der schraubenförmigen Walze in Querrichtung getrieben und somit vorteilhafterweise glattgezogen. Der Steg der Walze verläuft entweder links- oder rechtsdrehend, je nachdem, wo die Walze relativ zur Elektrodenbahn angeordnet ist und in welcher Richtung eine zusätzliche Kraft benötigt wird, um Falten zu glätten oder zu vermeiden. Sofern die Walze am Materialbereich angreift, ist die Walze hinsichtlich der schraubenförmigen Ausgestaltung vorzugsweise spiegelsymmetrisch ausgebildet bezüglich einer Spiegelebene, welche senkrecht zur Querrichtung ist. Auf diese Weise verläuft dann der Steg auf einer ersten Hälfte der Walze linksdrehend und auf einer zweiten Hälfte rechtsdrehend.

Wie bereits angedeutet wurde, erzeugt der Kalander unter Umständen in Förderrichtung einen Längsspannungsunterschied zwischen dem Freibereich und dem Materialbereich. Der Längsspannungsunterschied ergibt sich dadurch, dass durch die Druckspannung des Kalanders möglicherweise eine zusätzliche Kraft in Längsrichtung erzeugt wird, d.h. eine zusätzliche Längszugspannung, welche sich insbesondere zur Bahnspannung addiert. Da dies auf dem Freibereich nicht der Fall ist, ergibt sich dort eine geringere Längszugspannung als auf dem Materialbereich. Die Differenz dieser beiden Längszugspannungen in Freibereich und Materialbereich ist dann der Längsspannungsunterschied. Dieser Längsspannungsunterschied ergibt sich in Förderrichtung und beträgt beispielsweise bis zu 1%. Vorzugsweise wird der Längsspannungsunterschied durch eine der Walzen der Bearbeitungsvorrichtung ausgeglichen, indem diese Walze eine zusätzliche Längszugspannung erzeugt, vorzugsweise im Freibereich, möglich und geeignet ist aber auch eine entsprechend negative Längszugspannung im Materialbereich. Eine entsprechende Walze wird analog als Längsspannungswalze bezeichnet. Sofern zuvor und nachfolgend lediglich von einer Querzugwalze gesprochen wird, gelten die Ausführungen sinngemäß auch für eine Querzug- und Längsspannungswalze.

In einer zweckmäßigen Ausgestaltung ist die Walze, welche bereits eine Querzugspannung ausübt, ausgebildet, zusätzlich zu dieser Querzugspannung noch eine Längszugspannung auszuüben, sodass der Spannungsunterschied in Förderrichtung ausgeglichen wird. Zweckmäßigerweise weist demnach die Bearbeitungsvorrichtung eine Walze auf, welche sowohl eine zusätzliche Querzugspannung als auch eine zusätzliche Längszugspannung ausübt, um Spannungsunterschiede aufgrund des Kalanders auszugleichen und eine Faltenbildung zu vermeiden oder rückgängig zu machen.

Die Querzugspannung und die Längszugspannung werden allgemein auch jeweils als Zugspannung bezeichnet.

Zur Ausübung der zusätzlichen Längszugspannung sind grundsätzlich die gleichen Konzepte wie zur Ausübung einer Querzugspannung geeignet, sodass eine entsprechend ausgebildete Walze vorteilhafterweise sowohl eine Querzug- als auch eine Längszugspannung auf die Elektrodenbahn ausübt. Entsprechend gelten die obigen Ausführungen sinngemäß auch für eine Walze, welche eine zusätzliche Längszugspannung ausübt. Entsprechend weist die Walze in einer geeigneten Ausgestaltung zum Ausüben der Längszugspannung, insbesondere in Kombination mit der Querzugspannung, eine Mantelfläche auf, welche ganz oder teilweise aus einem Gummi hergestellt ist. Zweckmäßigerweise ist die Mantelfläche texturiert. Bevorzugterweise wird der beschriebene Anstellwinkel derart gewählt, dass auch eine geeignete Längszugspannung mittels Reibung erzeugt wird. Alternativ oder zusätzlich ist auch eine schraubenförmige Walze wie bereits beschrieben geeignet, sowohl eine Querzugspannung als auch eine Längszugspannung auszuüben. Die genaue Ausgestaltung, Dimensionierung und Orientierung der Walze und deren gegebenenfalls vorhandener Textur wird insbesondere abhängig davon gewählt, ob diese Walze am Materialbereich oder am Freibereich angreift.

Alternativ oder zusätzlich zu den vorgenannten Konzepten, mittels Reibung eine Längszugspannung auszuüben, weist die Walze zum Ausüben der Längszugspannung in einer geeigneten Ausgestaltung einen Antrieb auf, z.B. einen Elektromotor. Ein solcher Antrieb wird zweckmäßigerweise verwendet, falls ein Ausgleich des Längsspannungsunterschieds allein mittels Reibung wie beschrieben nicht möglich ist. Der Antrieb dreht die Walze und erzeugt so einen Schlupf relativ zur Kalanderwalze und eine entsprechende Kraft auf die Elektrodenbahn in oder entgegen der Förderrichtung und somit letztendlich eine zusätzliche Längszugspannung. Sofern die Walze innerhalb des Kalanders und neben einer Kalanderwalze angeordnet ist und mit dieser Kalanderwalze eine gemeinsame Drehachse aufweist, weisen die Walze und die Kalanderwalze dann voneinander getrennte Antriebe auf, sodass die Walze und die Kalanderwalze mit unterschiedlichen Geschwindigkeiten drehbar sind, um den Längsspannungsunterschied auszugleichen.

Bevorzugterweise ist die Querzugwalze eine erste Querzugwalze und oberhalb oder unterhalb der Elektrodenbahn angeordnet und die Bearbeitungsvorrichtung weist eine zweite Querzugwalze auf, welche bezüglich der ersten Querzugwalze auf der gegenüberliegenden Seite der Elektrodenbahn angeordnet ist, sodass die beiden Querzugwalzen einen Spalt bilden, durch welchen die Elektrodenbahn hindurchgefördert wird, sodass deren Trägerschicht beidseitig mittels je einer Querzugwalze bearbeitet wird. Die beiden Querzugwalzen bilden ein Walzenpaar und sind vorzugsweise hinsichtlich der Erzeugung einer Querzugspannung gleichartig ausgebildet, insbesondere mit gleichen Abmessungen, gleichen Texturen, gleichen Materialien oder eine Kombination hiervon. Dabei ist die zweite Querzugwalze diesbezüglich vorzugsweise spiegelbildlich zur ersten Querzugwalze ausgebildet, wobei die Elektrodenbahn eine Spiegelebene bildet. Die beiden Querzugwalzen weisen insbesondere entgegengesetzte Drehrichtungen auf. Sofern die beiden Walzen des Walzenpaars beide eine texturierte Mantelfläche aufweisen, sind die entsprechenden Erhebungen und/oder Vertiefungen auf beiden Mantelflächen zweckmäßigerweise komplementär zueinander ausgebildet, sodass einer Vertiefung eine Erhebung gegenüberliegt und umgekehrt, insbesondere derart, dass die Erhebungen und Vertiefungen ineinandergreifen.

In einer vorteilhaften Ausgestaltung ist in die oder eine weitere Walze ein Trennwerkzeug integriert, zur Bearbeitung der Trägerschicht derart, dass diese mittels des Trennwerkzeugs zerteilt wird. Die Integration eines Zerteilens mittels des Trennwerkzeugs in die Bearbeitungsvorrichtung zusätzlich zum Kalander ist besonders vorteilhaft, da zwei Funktionen in einer einzelnen Bearbeitungsvorrichtung zusammengefasst sind. Das Trennwerkzeug ist vorzugsweise ein Messer mit einer Anzahl von Klingen, wobei unter "eine Anzahl von" hier und auch allgemein "ein oder mehrere" verstanden wird. Die Walze wird dann auch als Schneidwalze bezeichnet. Die Walze schneidet die Elektrodenbahn und speziell die Trägerschicht mittels des Trennwerkzeugs vorzugsweise nach dem Prinzip des Rotationsschneidens. Das Trennwerkzeug, speziell dessen Klingen, ist vorzugsweise aus Wolframcarbid gefertigt. Sofern die Bearbeitung lediglich im Freibereich erfolgt, wird auch lediglich die Trägerschicht zerteilt. Sofern die Bearbeitung im Materialbereich erfolgt, wird zusätzlich zur Trägerschicht prinzipbedingt auch das Elektrodenmaterial zerteilt. Entsprechend ist auch bei Kombination der Querzugspannung und des Trennwerkzeugs eine Ausgestaltung denkbar und geeignet, bei welcher das Trennwerkzeug in eine erste Walze integriert ist und die Querzugspannung von einer anderen, zweiten Walze ausgeübt wird.

Durch die Integration eines Trennwerkzeugs in die Bearbeitungsvorrichtung und zusätzlich zum Kalandrieren ist eine weitere Funktion in die Bearbeitungsvorrichtung integriert. Allgemein ergibt sich als Vorteil dieser Integration zunächst, dass die Elektrodenbahn nicht wiederholt für verschiedene Bearbeitungsstationen auf- und wieder abgerollt werden muss, sondern sozusagen fortlaufend und unterbrechungsfrei durch mehrere Bearbeitungsstationen geführt wird. Kalandrieren und Zerteilen erfolgen mit einer einzelnen Bearbeitungsvorrichtung. Die Integration eines Trennwerkzeugs ist an sich unabhängig vom Ausüben einer Querzugspannung, profitiert jedoch davon. Daher wird eine Ausgestaltung, bei welcher die Bearbeitungsvorrichtung eine Walze aufweist, in welche ein Trennwerkzeug integriert ist, mittels welchem die Elektrodenbahn zerteilt wird, insbesondere entlang der Längsrichtung, auch ohne das Merkmal, dass die Bearbeitungsvorrichtung zusätzlich zumindest eine Walze aufweist, welche derart ausgebildet ist, dass diese auf die Elektrodenbahn eine Querzugspannung ausübt, als erfinderisch angesehen. Eine solche Bearbeitungsvorrichtung weist an sich schon den Vorteil einer erhöhten Integration auf, unabhängig von der Vermeidung einer Faltenbildung.

In einer geeigneten Ausgestaltung wird mittels des Trennwerkezugs die Trägerschicht im Freibereich derart zerteilt, dass wiederkehrend Ableiter ausgebildet werden. Dabei werden mittels des Trennwerkzeugs wiederkehrend erste Längsabschnitte des Freibereichs herausgetrennt, sodass Lücken entstehen, zwischen welchen zweite Längsabschnitte des Freibereichs als Ableiter stehen gelassen werden. Dadurch wird die Elektrodenbahn insbesondere genotcht, sodass ein nachträgliches Notchen nicht mehr nötig ist. Dadurch ergibt sich seitlich zweckmäßigerweise eine rechtecksignalförmige Seitenkante. Das Trennwerkzeug weist entsprechend zweckmäßigerweise eine Anzahl von Längsklingen auf, welche in Längsrichtung schneiden, und eine Anzahl von Querklingen, welche in Querrichtung schneiden. Die Längsklingen sind in Umlaufrichtung der Walze abwechselnd innen und außen angeordnet, um entsprechend Längsabschnitte abzutrennen oder stehen zu lassen. In Umlaufrichtung zwischen zwei Längsklingen ist eine Querklinge angeordnet, um aufeinanderfolgende Längsabschnitte des Freibereichs voneinander zu trennen.

Alternativ oder zusätzlich wird mittels des Trennwerkzeugs oder eines weiteren Trennwerkzeugs die Elektrodenbahn im Materialbereich und entlang der Förderrichtung derart zerteilt, dass mehrere Teilbahnen ausgebildet werden, welche nebeneinander verlaufen. Vorzugsweise wird die Elektrodenbahn mittig zerteilt. Die Teilbahnen werden jeweils auch als Tochtercoil bezeichnet. Beispielsweise werden zumindest eine linke und eine rechte Teilbahn erzeugt. Das Trennwerkzeug weist hierzu zweckmäßigerweise eine Anzahl von Klingen auf, welche entlang einer gemeinsamen Umfangslinie um die Walze herum und in Umlaufrichtung hintereinander angeordnet sind, sodass sich ein gerader Schnitt in Förderrichtung ergibt.

Das Trennwerkzeug zur Erzeugung der Teilbahnen ist entweder mit dem Trennwerkzeug zur Ausbildung der Ableiter gemeinsam in eine einzelne Walze integriert oder die beiden Trennwerkzeuge sind auf zwei unterschiedliche Walzen verteilt, sodass in eine erste Walze ein erstes Trennwerkzeug integriert ist, mittels welchem die Trägerschicht im Freibereich derart zerteilt wird, dass wiederkehrend Ableiter ausgebildet werden, und in eine zweite Walze ein zweites Trennwerkzeug integriert ist, mittels welchem die Elektrodenbahn im Materialbereich und entlang der Förderrichtung derart zerteilt wird, dass mehrere Teilbahnen ausgebildet werden, welche nebeneinander verlaufen.

Vorzugsweise weist das Trennwerkzeug eine einstellbare Schnitttiefe auf, indem die Klingen in die Walze einfahrbar oder aus dieser ausfahrbar sind. In einer geeigneten Ausgestaltung sind hierzu die Klingen des Trennwerkzeugs federnd miteinander verbunden, nämlich geeigneterweise derart, dass zwei in Umlaufrichtung der Walze benachbarte Klingen mittels einer Feder verbunden sind. In einer vorteilhaften Ausgestaltung verläuft entlang der Drehachse eine Einstellschraube, auf welcher ein Einstellkegel in Querrichtung gleitend gelagert ist. Der Einstellkegel drückt von innen und in radialer Richtung, d.h. senkrecht zur Drehachse, nach außen gegen die Klingen, welche gegen eine Mantelfläche des Einstellkegels gelagert sind. Damit ist ein Einstellmechanismus realisiert, bei welchem durch Drehen der Einstellschraube der Einstellkegel in Querrichtung durch die Walze verschoben wird und je nach Drehrichtung der Einstellschraube dann die Klingen in radialer Richtung weiter aus der Walze hinaustreibt oder diese durch die Federn in die Walze einfahren lässt, sodass im Ergebnis die Schnitttiefe einstellbar ist. Besonders vorteilhaft ist eine Ausgestaltung, bei welcher die Walze zugleich als eine Querzugwalze und als eine Schneidwalze ausgebildet ist, wobei dann das Trennwerkzeug in einen Querabschnitt der Walze integriert ist, welcher die Querzugspannung erzeugt. Auf diese Weise wird beim jeweiligen Zerteilen mittels des Trennwerkzeugs automatisch eine vorteilhafte Querzugspannung ausgeübt und dadurch die Gratbildung und auch Faltenbildung beim Zerteilen verringert. Besonders in Kombination mit einer Mantelfläche aus Gummi ergibt sich eine vorteilhafte Ausgestaltung, bei welcher das Gummi beim Kontakt mit der Elektrodenbahn zunächst komprimiert wird und dadurch dann die Klingen des Trennwerkzeugs freigibt, welche dann die Elektrodenbahn unter optimaler Querzugspannung zerteilen. Die Schnitttiefe und die Dicke des Gummis sind hierbei zweckmäßigerweise auf die Dicke der Trägerschicht und des Elektrodenmaterials abgestimmt. Die Mantelfläche ist entsprechend kompressibel, sodass das Trennwerkzeug bei einer Kompression der Mantelfläche automatisch mit geeigneter Schnitttiefe freigegeben wird.

Auch in der Ausgestaltung als Schneidwalze ist der Walze auf der gegenüberliegenden Seite der Elektrodenbahn zweckmäßigerweise eine Gegenwalze zugeordnet, welche mit der Walze dann ein Walzenpaar bildet. Die Schneidwalze ist oberhalb oder unterhalb der Elektrodenbahn angeordnet und die Bearbeitungsvorrichtung weist eine Gegenwalze auf, welche bezüglich der Schneidwalze auf der gegenüberliegenden Seite der Elektrodenbahn angeordnet ist, sodass die beiden Walzen einen Spalt bilden, durch welchen die Elektrodenbahn hindurchgefördert wird. Dabei wird deren Trägerschicht mittels der Schneidwalze bearbeitet, wobei eine Mantelfläche der Gegenwalze eine Gegenkontur für das Trennwerkzeug bildet. Das Trennwerkzeug rollt demnach sozusagen über die Gegenwalze ab. Dadurch ist ein Keilschneiden realisiert, was gegenüber einem Scherschneiden mit zwei gegenüberliegenden Messern den Vorteil einer verminderten Grat- und Faltenbildung aufweist. Die Gegenwalze oder zumindest deren Mantelfläche ist vorzugsweise aus einem harten Material hergestellt. Die Mantelfläche der Schneidwalze ist dagegen nicht zwingend aus einem ähnlichen oder dem gleichen Material hergestellt, sondern vorzugsweise wie zuvor bereits beschrieben aus einem Gummi.

Besonders zweckmäßig ist eine Ausgestaltung, bei welcher die Gegenwalze eine Kalanderwalze des Kalanders ist, sodass die Schneidwalze innerhalb des Kalanders angeordnet ist und dort die Elektrodenbahn zerteilt. Dadurch wird eine separate Gegenwalze eingespart, zudem ist eine Kalanderwalze typischerweise bereits aus einem geeigneten Material zur Verwendung als Gegenwalze hergestellt. Da die Schneidwalze im Bereich des Trennwerkzeugs stark auf die Gegenwalze drückt, besteht potentiell die Gefahr einer Verbiegung der Gegenwalze, was speziell im Kalander von Nachteil ist. Daher ist in einer vorteilhaften Ausgestaltung auf einer bezüglich der Schneidwalze gegenüberliegenden Seite der Gegenwalze eine zusätzliche Unterstützungswalze angeordnet, sodass die Schneidwalze und die Unterstützungswalze von gegenüberliegenden Seiten auf die Gegenwalze drücken und die einseitige Krafteinwirkung durch die Schneidwalze aufgehoben wird. Dies ist speziell im Kalander vorteilhaft. Die Unterstützungswalze ist geeigneterweise aus einem harten Material hergestellt.

Der Kalander ist in einer bevorzugten Ausgestaltung zweistufig ausgebildet und weist drei Kalanderwalzen auf, von denen eine Kalanderwalze für die beiden anderen Kalanderwalzen jeweils als Gegenwalze dient und somit vorteilhaft doppelt genutzt ist. Die Gegenwalze ist dabei vorzugsweise zwischen den beiden anderen Kalanderwalzen angeordnet, sodass diese auf gegenüberliegenden Seiten der Kalanderwalze angeordnet sind. Die Elektrodenbahn durchläuft im Kalander dann zwei Bearbeitungsstufen zum Verdichten, sodass das Elektrodenmaterial zweimal verdichtet wird. Sofern in den Kalander eine Schneidwalze integriert ist, bildet die Kalanderwalze, welche eine Gegenwalze für die anderen Kalanderwalzen ist, zweckmäßigerweise zugleich auch eine Gegenwalze für die Schneidwalze, sodass sich eine besonders kompakte Anordnung ergibt.

In einer bevorzugten Ausgestaltung weist die Bearbeitungsvorrichtung eine Bahnzufuhr zur Zufuhr der Elektrodenbahn auf und eine Bahnaufnahme zur Aufnahme der bearbeiteten Elektrodenbahn. Die Bahnzufuhr weist vorzugsweise einen Abwickler auf, welcher die Elektrodenbahn abwickelt und in Förderrichtung ausgibt. Zweckmäßigerweise weist die Bahnzufuhr zusätzlich eine Gegenwalze auf, welche bezüglich des Abwicklers auf der gegenüberliegenden Seite der Elektrodenbahn angeordnet ist und welche die Elektrodenbahn an den Abwickler andrückt, sodass die Elektrodenbahn eine normale Druckspannung erfährt, bei welcher das Elektrodenmaterial insbesondere nicht verdichtet wird. Die Bahnaufnahme weist analog vorzugsweise einen Aufwickler auf, welcher die Elektrodenbahn oder deren Teilbahnen jeweils in Förderrichtung aufnimmt und aufwickelt. Zweckmäßigerweise weist die Bahnaufnahme zusätzlich ebenfalls analog eine Gegenwalze auf, welche bezüglich des Aufwicklers auf der gegenüberliegenden Seite der Elektrodenbahn angeordnet ist und welche die jeweilige Teilbahn an den Aufwickler andrückt, sodass auch hier die Elektrodenbahn, genauer die jeweilige Teilbahn, eine normale Druckspannung erfährt, bei welcher das Elektrodenmaterial insbesondere nicht verdichtet wird. Der Aufwickler und der Abwickler erzeugen in Förderrichtung und somit in Längsrichtung der Elektrodenbahn eine Bahnspannung.

Zwischen der Bahnzufuhr und der Bahnaufnahme weist die Bearbeitungsvorrichtung mehrere Bearbeitungsstufen auf, von welchen zumindest eine durch den Kalander gebildet wird und wenigstens eine weitere durch die zumindest eine zusätzliche Walze. Die weiter oben beschriebenen diversen Ausgestaltungen der zusätzlichen Walze werden nun durch eine oder mehrere Bearbeitungsstufen entlang der Förderrichtung umgesetzt. Dabei ist grundsätzlich eine Vielzahl an Kombinationen der genannten Konzepte möglich. Nachfolgend werden nun vier vorteilhafte Bearbeitungsstufen der Bearbeitungsvorrichtung beschrieben, mittels welchen jeweils ein Verfahrensschritt des Verfahrens ausgeführt wird. Die beschriebene Kombination der vier Bearbeitungsstufen miteinander und deren relative Lage zueinander stellen eine bevorzugte Ausgestaltung dar, sind in dieser Form an sich aber nicht zwingend, sodass sich weitere vorteilhafte Ausgestaltungen durch Auslassen oder Hinzufügen einer oder mehrerer Bearbeitungsstufen sowie durch andere Kombinationen und/oder relative Lagen der Bearbeitungsstufen zueinander ergeben.

Vorzugsweise weist die Bearbeitungsvorrichtung - insbesondere in Förderrichtung hinter der Bahnzufuhr - eine erste Bearbeitungsstufe auf, mit einer Walze, welche derart ausgebildet ist, dass diese am Freibereich angreift und in diesem die Querzugspannung und je nach Ausgestaltung auch eine Längszugspannung ausübt und zugleich im Freibereich wiederkehrend Ableiter ausbildet. Die Walze ist somit sowohl eine Querzugwalze als auch eine Schneidwalze wie bereits beschrieben, insbesondere mit einem Innenabschnitt für den Materialbereich und zwei seitlichen Außenabschnitten, zum Ausüben einer Querzugspannung in den seitlichen Freibereichen. Auf der gegenüberliegenden Seite der Elektrodenbahn ist zweckmäßigerweise eine weitere Walze als Gegenwalze angeordnet, welche einerseits ebenfalls eine Querzugwalze ist und andererseits eine Gegenwalze für das Trennwerkzeug der Schneidwalze. Die Bearbeitungsstufe ist somit insgesamt ein Walzenpaar, durch welches die Elektrodenbahn hindurchgeführt wird.

Durch die erste Bearbeitungsstufe wird ein erster Verfahrensschritt realisiert, in welchem die Elektrodenbahn genotcht wird, d.h. in welchem seitlich Ableiter ausgebildet werden, und dies besonders faltenfrei. Aus dem jeweiligen Freibereich werden demnach unter Einfluss von Querzugspannung einerseits und Bahnspannung, gegebenenfalls in Kombination mit Längszugspannung, andererseits wiederkehrend Ableiter geschnitten. Das Trennwerkzeug in der Schneidwalze wird dabei derart eingestellt, dass die Trägerschicht zerteilt wird. Die Querzugwalzen erzeugen dabei so viel Querzugspannung, dass Falten geglättet werden oder erst gar nicht entstehen. Zugleich wird durch die Querzugspannung der Verschnitt, welcher beim Zerteilen im Freibereich anfällt, seitlich abgeführt, z.B. in eine Rutsche. Die Gegenwalze weist gegenüberliegend zum Trennwerkzeug der Schneidwalze zweckmäßigerweise eine Mantelfläche aus hartem Material auf. Auf ein Untermesser wird verzichtet.

Vorzugsweise weist die Bearbeitungsvorrichtung eine zweite Bearbeitungsstufe auf, welche zwei Kalanderwalzen des Kalanders auf gegenüberliegenden Seiten der Elektrodenfolie aufweist, zum Verdichten des Elektrodenmaterials. Die zusätzliche Walze ist hierbei als Querzugwalze oder als Querzug- und Längsspannungswalze ausgebildet und seitlich einer der Kalanderwalzen angeordnet und weist mit dieser zusammen eine gemeinsame Drehachse auf. Die Kalanderwalze wirkt lediglich auf den Materialbereich und die zusätzliche Walze wirkt lediglich auf den Freibereich. Bevorzugterweise weist die Bearbeitungsvorrichtung nicht nur eine zusätzliche Walze auf, sondern weitere drei und somit zusammengenommen vier Walzen derart, dass eine jeweilige der beiden Kalanderwalzen in Querrichtung beidseitig von zwei der vier Walzen, d.h. von zwei Querzugwalzen, eingefasst ist und mit diesen eine gemeinsame Drehachse aufweist. Die vier Walzen wirken jeweils lediglich in einem Freibereich und üben dort eine Querzugspannung aus und in einer vorteilhaften Ausgestaltung auch eine zusätzliche Längszugspannung. Die jeweilige Kalanderwalze ist vorzugsweise lediglich so breit wie der Materialbereich, sodass die zusätzlichen Walzen lediglich auf den Freibereich wirken. Die zweite Bearbeitungsstufe folgt vorzugsweise auf die erste Bearbeitungsstufe, sodass das Kalandrieren nach dem Notchen erfolgt und die Querzugwalzen der zweiten Bearbeitungsstufe auf die bereits ausgebildeten Ableiter wirken. Auch die zweite Bearbeitungsstufe ist somit insgesamt ein Walzenpaar, durch welches die Elektrodenbahn hindurchgeführt wird.

Durch die zweite Bearbeitungsstufe wird ein zweiter Verfahrensschritt realisiert, in welchem die Elektrodenbahn kalandriert wird, wobei hier speziell das Elektrodenmaterial unter Einfluss von Querzugspannung einerseits und Bahnspannung andererseits faltenfrei verdichtet wird. Dabei wird eine Querzugspannung und gegebenenfalls eine zusätzliche Längszugspannung lediglich seitlich im Freibereich durch die seitlichen Querzugwalzen erzeugt, während mittig das Elektrodenmaterial von den Kalanderwalzen kalandriert wird.

Vorzugsweise weist die Bearbeitungsvorrichtung eine dritte Bearbeitungsstufe auf, mit der oder einer weiteren Walze, in welche - insbesondere wie bereits beschrieben - ein Trennwerkzeug integriert ist, zur Bearbeitung der Trägerschicht derart, dass diese mittels des Trennwerkzeugs zerteilt wird. Zugleich ist ebendiese Walze derart ausgebildet, dass diese am Materialbereich angreift und in diesem die Querzugspannung ausübt. Die Walze ist demnach eine Querzugwalze, welche gleichzeitig eine Schneidwalze ist, nämlich genauer ein Slitter zur Erzeugung von Teilbahnen. In einer zweckmäßigen Weiterbildung ist die Walze auch eine Längsspannungswalze und erzeugt wie beschrieben eine zusätzliche Längszugspannung. Auf der gegenüberliegenden Seite der Elektrodenbahn ist zweckmäßigerweise eine weitere Walze als eine Gegenwalze angeordnet, welche einerseits ebenfalls eine Querzugwalze ist und andererseits eine Gegenwalze für das Trennwerkzeug der Schneidwalze. Als Gegenwalze dient vorzugsweise eine der Kalanderwalzen der zweiten Bearbeitungsstufe. Wie bereits beschrieben ist dann zweckmäßigerweise zusätzlich eine Unterstützungswalze gegenüber der Schneidwalze vorhanden. Die dritte Bearbeitungsstufe folgt geeigneterweise auf die zweite Bearbeitungsstufe.

Durch die dritte Bearbeitungsstufe ist ein dritter Verfahrensschritt realisiert, in welchem die Elektrodenbahn geschlitzt wird, d.h. in welchem durch einen insbesondere mittigen Längsschnitt mehrere Teilbahnen ausgebildet werden, und dies besonders gratfrei und faltenfrei. Die Elektrodenbahn wird demnach unter Einfluss von Querzugspannung einerseits und Bahnspannung andererseits in mehrere Teilbahnen zerteilt. Die Querzugwalze erzeugt dabei im Gegensatz zu den Kalanderwalzen lediglich eine normale Druckspannung, sodass beim Schlitzen das Elektrodenmaterial zunächst nicht weiter verdichtet wird. Durch diese Druckspannung wird dennoch die Bildung eines Grats beim Zerteilen vermindert oder gänzlich verhindert. Durch die Querzugspannung werden das Elektrodenmaterial und die Trägerschicht durch das Eintauchen des Trennwerkzeugs beim Zerteilen besonders wenig beeinflusst und insbesondere nicht unkontrolliert in einen Schneidspalt gezogen. Eine Faltenbildung und ein sich daraus ergebendes Wellenprofil werden vermieden.

Vorzugsweise weist die Bearbeitungsvorrichtung eine vierte Bearbeitungsstufe auf, welche wie die zweite Bearbeitungsstufe wiederum zwei Kalanderwalzen des Kalanders auf gegenüberliegenden Seiten der Elektrodenfolie aufweist, zum erneuten Verdichten des Elektrodenmaterials. Die zweite und vierte Bearbeitungsstufe bilden den Kalander somit als zweistufigen Kalander aus, für welchen sich vorteilhafte Ausgestaltungen wie weiter oben bereits beschrieben ergeben. Die Ausführungen zur zweiten Bearbeitungsstufe gelten sinngemäß insbesondere auch für die vierte Bearbeitungsstufe. Vorzugsweise sind analog zur zweiten Bearbeitungsstufe in der vierten Bearbeitungsstufe vier zusätzliche Walzen jeweils als Querzugwalze und gegebenenfalls zusätzlich als Längsspannungswalze ausgebildet und seitlich einer jeweiligen Kalanderwalze angeordnet, sodass eine jeweilige Kalanderwalze in Querrichtung beidseitig von zwei Querzugwalzen eingefasst ist und mit diesen eine gemeinsame Drehachse aufweist. Die Kalanderwalze ist lediglich so breit wie der Materialbereich, sodass die Querzugwalzen lediglich auf den Freibereich wirken. Die vierte Bearbeitungsstufe folgt vorzugsweise auf die dritte Bearbeitungsstufe, sodass nach dem Zerteilen, insbesondere Schlitzen, das Elektrodenmaterial der Teilbahnen weiter verdichtet wird. Zusätzlich werden speziell die beim Schlitzen erzeugten Schnittkanten kalandriert, sodass eventuelle Grate zusammengedrückt und begradigt werden, vorzugsweise unterhalb einer Höhe von 50 µm.

Durch die vierte Bearbeitungsstufe ist ein vierter Verfahrensschritt realisiert, in welchem die Teilbahnen kalandriert werden und eventuelle Grate aus der dritten Bearbeitungsstufe gequetscht werden. Auch dies erfolgt unter Einfluss von Querzugspannung einerseits und Bahnspannung, gegebenenfalls in Kombination mit Längszugspannung, andererseits, sodass wiederum faltenfrei verdichtet wird. Analog zur zweiten Bearbeitungsstufe wird eine Querzugspannung und je nach Ausgestaltung auch eine zusätzliche Längszugspannung lediglich seitlich im Freibereich durch die seitlichen Querzugwalzen erzeugt, während mittig das Elektrodenmaterial von den Kalanderwalzen kalandriert wird.

Sofern in der zweiten, dritten und vierten Bearbeitungsstufe Walzen mit texturierter Mantelfläche verwendet werden, erzeugen diese möglicherweise eine Struktur oder Profilierung der Trägerschicht und/oder des Elektrodenmaterials. Durch die texturierte Mantelfläche wird also im Freibereich und/oder im Materialbereich ein Muster eingeprägt. Im Freibereich ist dies typischerweise unproblematisch, da hier die Ableiter bei der weiteren Verarbeitung der Elektroden verschweißt werden. Zumindest im Materialbereich wird das eventuell durch die dritte Bearbeitungsstufe eingeprägte Muster aber zweckmäßigerweise mittels der vierten Bearbeitungsstufe ausgeglichen, d.h. die Elektrodenbahn und speziell das Elektrodenmaterial wird mit der vierten Bearbeitungsstufe geglättet. Hierzu weist die Kalanderwalze der vierten Bearbeitungsstufe selbst eine glatte Mantelfläche auf, um das Elektrodenmaterial im Materialbereich zu glätten, nachdem dieses in der dritten Bearbeitungsstufe von einer Querzugwalze mit texturierter Mantelfläche möglicherweise strukturiert oder profiliert wurde. Unabhängig davon weisen auch alle übrigen Kalanderwalzen jeweils zweckmäßigerweise eine glatte Mantelfläche auf. Besonders zweckmäßig ist eine Ausgestaltung, bei welcher die Walze der dritten Bearbeitungsstufe, falls diese eine texturierten Mantelfläche aufweist, auf der Mantelfläche Erhebungen aufweist, sodass im Elektrodenmaterial Vertiefungen gebildet werden, welche dann durch die vierte Bearbeitungsstufe besonders einfach glättbar sind.

Die im Zusammenhang mit den vier Bearbeitungsstufen beschriebenen Walzen, abgesehen von den Kalanderwalzen, sind vorzugsweise unabhängig ausgebildet, sodass also jede Bearbeitungsstufe jeweils eine oder mehrere eigene Walzen aufweist. Lediglich eine oder mehrere der Kalanderwalzen werden in mehreren Bearbeitungsstufen zweckmäßigerweise mehrfach verwendet. Möglich und geeignet sind aber auch Ausgestaltungen, bei welchen die Funktionen von mehreren Walzen unterschiedlicher Bearbeitungsstufen in einer einzelnen Walze zusammengefasst sind.

Vor dem Aufwickler und nach den vorgenannten Bearbeitungsstufen ist zweckmäßigerweise eine Reinigungsstufe angeordnet, welche auch als Bahnreinigung bezeichnet wird. Mittels der Reinigungsstufe werden die Teilbahnen in einem fünften Verfahrensschritt gereinigt. Beispielsweise wird eine elektrostatische Ladung auf die Elektrodenbahn aufgebracht und dadurch entsprechend leichte Partikel wie z.B. loses Elektrodenmaterial angesaugt und entfernt. Nach dem Aufwickler werden die Teilbahnen zweckmäßigerweise zu Elektroden vereinzelt, indem die Teilbahnen mittels eines quer verlaufenden Trennwerkzeugs in geeignet lange Längsabschnitte zerteilt werden, welche dann jeweils eine Elektrode mit zugehörigem Ableiter darstellen.

Zusammenfassend wird die Elektrodenbahn bevorzugterweise in allen vier Bearbeitungsstationen mit Hilfe spezieller Querzugwalzen und/oder Querzug- und Längsspannungswalzen unter Einfluss einer zusätzlich Querzugspannung und gegebenenfalls auch einer zusätzlichen Längszugspannung bearbeitet, wodurch insgesamt eine Faltenbildung effizient vermieden wird. Die Trennwerkzeuge sind vorteilhaft in der jeweiligen Bearbeitungsstufe lediglich auf einer Seite der Elektrodenfolie angeordnet und schneiden gegen eine Mantelfläche einer Gegenwalze, also gegen hartes Material oder gegen Gummi. Auf ein Untermesser wird vorteilhaft verzichtet. Durch eine texturierte Mantelfläche insbesondere aus Gummi, aber alternativ auch aus hartem Material, lassen sich besonders effektiv Querzugspannungen und/oder Längszugspannungen einleiten. Die Breite der Kalanderwalzen entspricht zweckmäßigerweise der Breite des Materialbereichs, sodass im Kalander seitlich in den Freibereichen zusätzlich mittels seitlicher Querzugwalzen vorteilhaft Querzugspannungen und gegebenenfalls auch zusätzliche Längszugspannungen eingeleitet werden. Eine Erwärmung oder Temperierung der Elektrodenfolie oder der Kalanderwalzen ist vorliegend nicht notwendig, sodass hierauf zweckmäßigerweise verzichtet wird und entsprechend Energie eingespart wird. Jegliche Zerteilung ist funktional in Walzen, vorzugsweise in Querzugwalzen, integriert, sodass ein separater Prozessschritt zum Zerteilen eingespart wird. Geeigneterweise wird das Kalandrieren auf zwei Verfahrensschritte aufgeteilt und dadurch eine vorteilhafte Lastverteilung erzielt sowie eine besonders hohe Dichte des Elektrodenmaterials. Durch ein dem Schlitzen nachgeschaltetes Kalandrieren werden zudem eventuelle Grate vorteilhaft gequetscht und dadurch insbesondere sichergestellt, dass die fertigen Elektroden eine Randzonenschädigung unterhalb von 10 µm aufweisen. Horizontale Kräfte beim Zerteilen mittels der Trennwerkzeuge auf entsprechende Gegenwalzen werden durch Unterstützungswalzen vorteilhaft ausgeglichen. Durch Doppelnutzung einer der Kalanderwalzen als mittlere Kalanderwalze zwischen einer oberen und einer unteren Kalanderwalze ist diese mittlere Kalanderwalze optimal ausbalanciert.

Bevorzugt ist eine Ausgestaltung, bei welcher die Querzugwalzen zur oberen Kalanderwalze jeweils eine texturierte Mantelfläche mit Vertiefungen aufweisen und bei welcher die Querzugwalzen zur mittleren Kalanderwalze jeweils eine texturierte Mantelfläche mit Erhebungen aufweisen, welche insbesondere derart ausgebildet sind, dass diese beim Hindurchfördern der Elektrodenbahn in die Vertiefungen der gegenüberliegenden Querzugwalzen eingreifen. Auf diese Weise wird auf der Oberseite der Elektrodenbahn im Freibereich insbesondere eine vorstehende Profilierung oder Struktur ausgebildet, welche von der Unterseite betrachtet entsprechende Vertiefungen darstellt. Die Querzugwalzen zur unteren Kalanderwalze weisen hierbei jeweils vorzugsweise eine texturierte Mantelfläche mit Vertiefungen auf, welche analog insbesondere derart ausgebildet sind, dass diese beim Hindurchfördern der Elektrodenbahn in die Erhebungen der gegenüberliegenden, mittleren Querzugwalzen eingreifen. Denkbar und ebenfalls geeignet ist jedoch grundsätzlich auch eine umgekehrt Anordnung von Erhebungen und Vertiefungen.

Das Schlitzen, das Kalandrieren und das Notchen sind vorteilhaft in einer einzelnen Bearbeitungsvorrichtung integriert. Alle Verfahrensschritte werden besonders faltenfrei durchgeführt. Insofern handelt es sich beim dem Verfahren speziell insbesondere um ein Verfahren zum faltenfreien Kalandrieren und gratfreien Ableiter- und Längsschneiden einer kontinuierlich beschichteten Elektrodenbahn. Die Handhabung der Elektrodenbahn ist deutlich vereinfacht, wodurch sich verbesserte Taktzeiten in der Bearbeitung und hohe Fertigungsgeschwindigkeiten von z.B. zwischen 80 m/min bis 100 m/min ergeben.

Nachfolgend werden Ausführungsbeispiele der Erfindung anhand einer Zeichnung näher erläutert. Darin zeigen jeweils schematisch:
- Fig. 1: eine Bearbeitungsvorrichtung,
- Fig. 2a - f: jeweils ausschnittsweise eine Elektrodenbahn,
- Fig. 3a, b: jeweils ausschnittsweise eine andere Elektrodenbahn mit Falten,
- Fig. 4a - c: jeweils ausschnittsweise eine andere Elektrodenbahn,
- Fig. 5a - b: jeweils ausschnittsweise eine andere Elektrodenbahn,
- Fig. 6a - d: Bahnspannung, Druckspannung und negative/positive Dehnung beim Bearbeiten einer Elektrodenbahn,
- Fig. 6e - 6g: Längsspannungsunterschied und dessen Ausgleich beim Bearbeiten einer Elektrodenbahn,
- Fig. 7: ein Schlitzen einer Elektrodenbahn mit Ober- und Untermesser,
- Fig. 8: eine erste Bearbeitungsstufe der Bearbeitungsvorrichtung aus Fig. 1,
- Fig. 9: eine zweite Bearbeitungsstufe der Bearbeitungsvorrichtung aus Fig. 1,
- Fig. 10: eine dritte Bearbeitungsstufe der Bearbeitungsvorrichtung aus Fig. 1,
- Fig. 11: eine vierte Bearbeitungsstufe der Bearbeitungsvorrichtung aus Fig. 1,
- Fig. 12a, b: unterschiedliche Ansichten einer Walze mit Trennwerkzeug,
- Fig. 13: eine Variante für eine Walze,
- Fig. 14: eine weitere Variante für eine Walze.

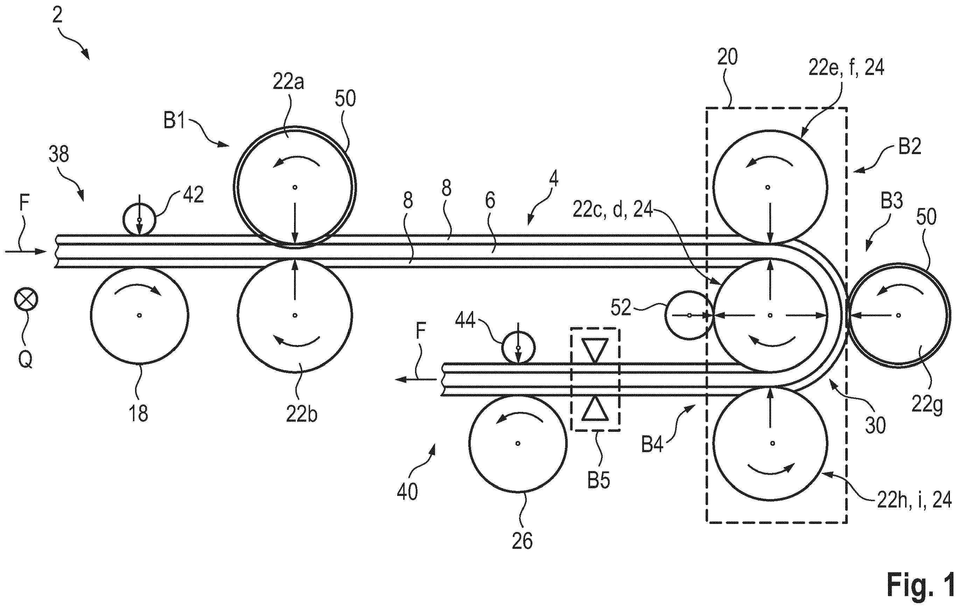

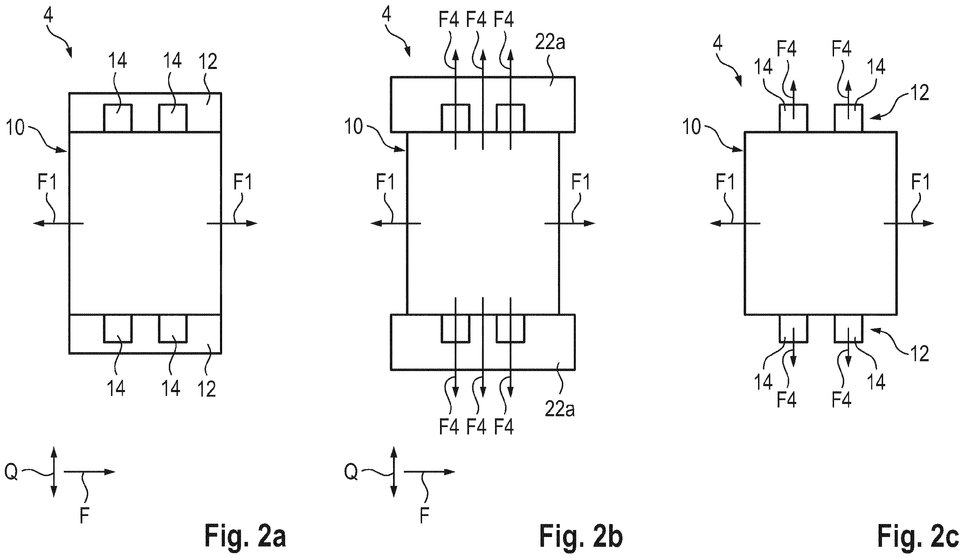

In Fig. 1 ist beispielhaft und in einer Schnittansicht ein Ausführungsbeispiel einer Bearbeitungsvorrichtung 2 mit vier Bearbeitungsstufen B1, B2, B3, B4 zur Durchführung eines Verfahren zur Bearbeitung einer Elektrodenbahn 4 dargestellt. Die Elektrodenbahn 4 weist eine Trägerschicht 6 auf und ein Elektrodenmaterial 8, welches lediglich in einem Materialbereich 10 der Elektrodenbahn 4 auf die Trägerschicht 6 aufgetragen ist, sodass ein Freibereich 12 verbleibt, welcher frei ist von Elektrodenmaterial 8, zur Ausbildung von Ableitern 14. In den Fig. 2a - f ist die Elektrodenbahn 4 jeweils ausschnittsweise in einer Draufsicht während eines Verfahrensschritts des Verfahrens gezeigt. Die Elektrodenbahn 4 dient als Halbzeug und als Ausgangspunkt für die Herstellung einzelner Elektroden 16 für eine nicht explizit gezeigte Batterie.

Im Rahmen des Verfahrens wird die Elektrodenbahn 4 in einer Förderrichtung F durch die Bearbeitungsvorrichtung 2 geführt, sodass der Materialbereich 10 und der Freibereich 12 nebeneinander verlaufen. Die Bearbeitungsvorrichtung 2 in Fig. 1 ist eine roll-to-toll-Vorrichtung und das Verfahren ein roll-to-roll-Verfahren. Die Elektrodenbahn 4 wird von einem Abwickler 18 der Bearbeitungsvorrichtung 2 abgerollt. Die Förderrichtung F entspricht einer Längsrichtung der Elektrodenbahn 4. Quer, d.h. hier senkrecht, zur Längsrichtung und somit auch zur Förderrichtung F verläuft eine Querrichtung Q. Die Elektrodenbahn 4 liegt in einer Ebene, welche durch die Längsrichtung und die Querrichtung Q aufgespannt wird. Der Materialbereich 10 und der Freibereich 12 verlaufen in Förderrichtung F nebeneinander und grenzen unmittelbar aneinander an. Der Freibereich 12 zeichnet sich dadurch aus, dass dieser dünner ist als der Materialbereich 10, da in diesem ja das zusätzliche Elektrodenmaterial 8 aufgetragen ist. In den Fig. 1 und 2a - f verläuft ein einzelner Materialbereich 10 mittig zwischen zwei seitlichen Freibereichen 12, welche auch Randbereiche der Elektrodenbahn 4 bilden. Die Ausführungen gelten aber analog aber auch für andere Geometrien.

Die Trägerschicht 6 weist hier eine Dicke d1 im Bereich von 5 µm bis 20 µm auf. Das Elektrodenmaterial 8 ist hier vor der Zufuhr in die Bearbeitungsvorrichtung 2 beidseitig je mit einer Dicke d2 im Bereich von 50 µm bis 200 µm aufgetragen. Entsprechend weist die Elektrodenbahn 4 im Materialbereich 10 eine Dicke d3 im Bereich von 105 µm bis 420 µm auf. In einer nicht gezeigten Alternative ist das Elektrodenmaterial 8 lediglich einseitig auf die Trägerschicht 6 aufgetragen. Die hier gemachten Ausführungen gelten analog auch für eine lediglich einseitig beschichtete Trägerschicht 6.

Die Bearbeitungsvorrichtung 2 weist einen Kalander 20 auf, durch welchen die Elektrodenbahn 4 geführt wird und mit welchem der Materialbereich 10 kalandriert wird. Dadurch wird senkrecht sowohl zur Längsrichtung als auch zur Querrichtung Q, also zur Ebene der Elektrodenbahn 4, eine Kraft ausgeübt, durch welche das Elektrodenmaterial 8 gepresst und verdichtet wird. Vorliegend wird das Elektrodenmaterial 8 in zwei aufeinanderfolgenden Stufen insgesamt um 30% bis 50% verdichtet. Durch das Pressen und Verdichten erzeugt der Kalander 20 Kräfte in der Ebene, d.h. in Querrichtung Q und/oder in Längsrichtung, d.h. in Förderrichtung F, da dies die einzigen verbleibenden Richtungen sind, in welche die Elektrodenbahn 4 ausweichen kann.

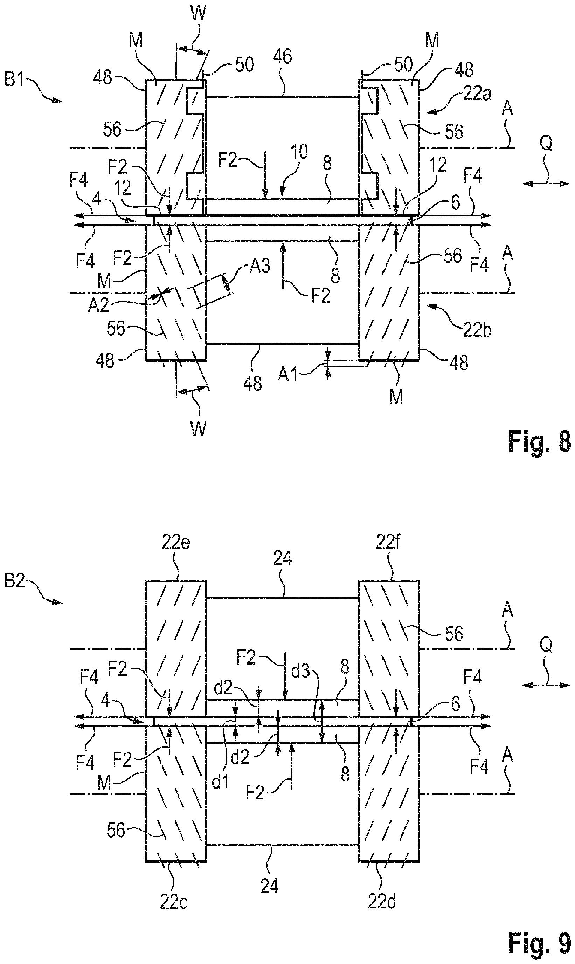

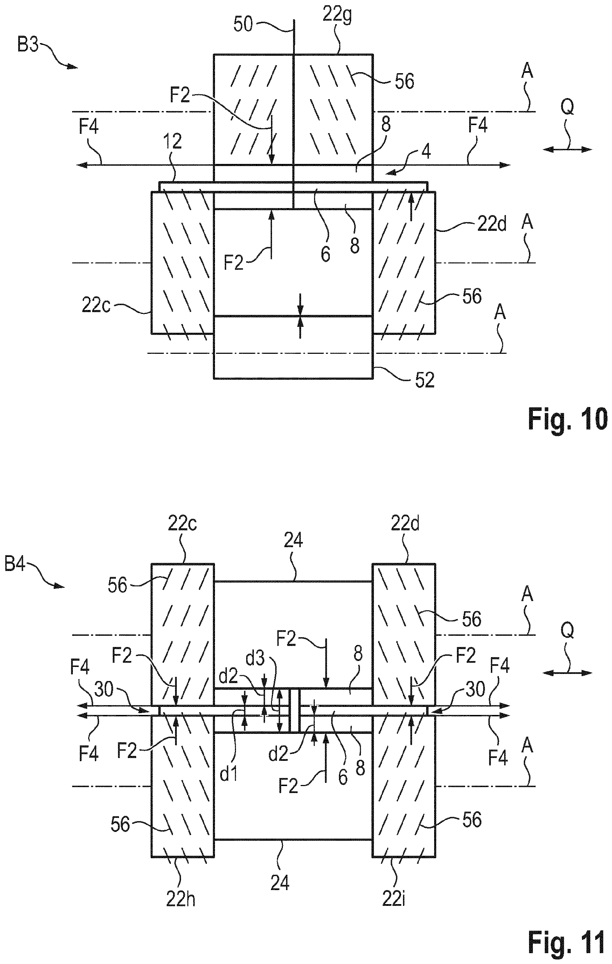

Vorliegend weist nun die Bearbeitungsvorrichtung 2 zusätzlich zumindest eine Walze 22a - i auf, mittels welcher die Trägerschicht 6 bearbeitet wird, genauer gesagt ist die Walze 22a - i derart ausgebildet, dass diese auf die Elektrodenbahn 4 zusätzliche Zugspannung, hier zumindest eine Querzugspannung F4 ausübt. Allgemein sind die Walzen 22a - i somit zur Bearbeitung der Elektrodenfolie 4 ausgebildet. Im gezeigten Ausführungsbeispiel der Fig. 1 weist die Bearbeitungsvorrichtung sogar neun zusätzliche Walzen 22a - i auf, welcher an unterschiedlichen Positionen entlang der Förderrichtung F und in den diversen Bearbeitungsstationen B1 - B4 mitunter unterschiedliche Funktionen erfüllen, wie weiter unten noch genauer erläutert wird. Wie sich bereits aus Fig. 1 ergibt, ist die jeweilige Walze 22a - i entweder in Förderrichtung F vor oder hinter dem Kalander 20 angeordnet oder innerhalb desselben, z.B. wie gezeigt als Teil der dritten Bearbeitungsstufe B3 in Förderrichtung F zwischen den zwei Bearbeitungsstufen B2, B4 des mehrstufigen Kalanders 20. Weitere Walzen 22a - f, h, i sind innerhalb des Kalanders 20 senkrecht zur Förderrichtung F neben einer jeweiligen Kalanderwalze 24 derart angeordnet, dass die Walze 22a - f, h, i und die Kalanderwalze 24 eine gemeinsame Drehachse A aufweisen und dann unterschiedliche Längsbereiche der Elektrodenbahn 4 gleichzeitig unterschiedlich bearbeitet werden, wie in den Fig. 9 und 11 erkennbar ist. Die zusätzlichen Walzen 22a - i sind keine Kalanderwalzen 24, sondern dienen vorrangig oder ausschließlich der Bearbeitung der Trägerschicht 6 und nicht zwingend zur Bearbeitung des Elektrodenmaterials 8, welches jedoch je nach Anordnung und Funktionalität einer jeweiligen Walze 22a - i relativ zur Elektrodenbahn 4 unter Umständen auch bearbeitet wird.

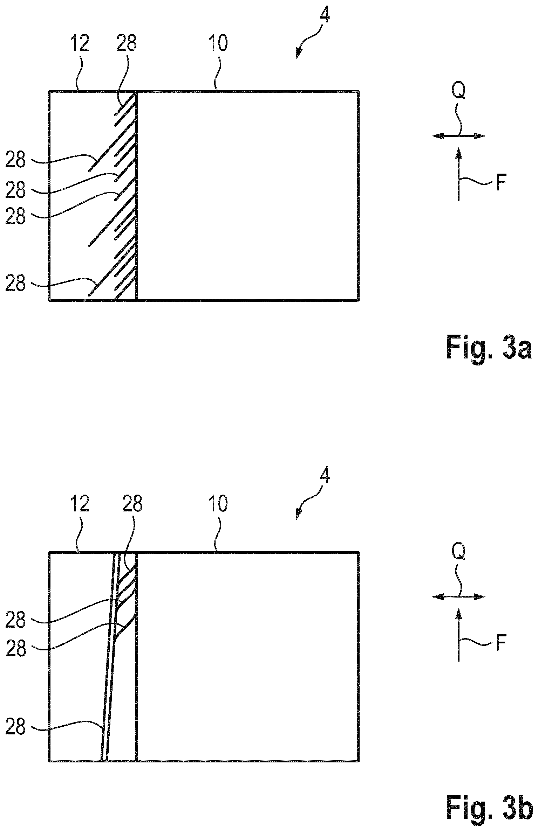

Beim Kalandrieren der Elektrodenbahn 4 besteht die Gefahr einer Bildung von Falten 28, was negative Auswirkungen auf die Qualität der Elektrodenbahn 4 hat. Die Bildung von Falten 28 ist abhängig von der Stärke einer Bahnspannung F1 während der Bearbeitung, welche in Förderrichtung F durch den Abwickler 18 und einen Aufwickler 26 entsteht. Zwei Beispiele für eine Elektrodenfolie 4 mit Falten 28 sind beispielhaft in Fig. 3a und 3b gezeigt.

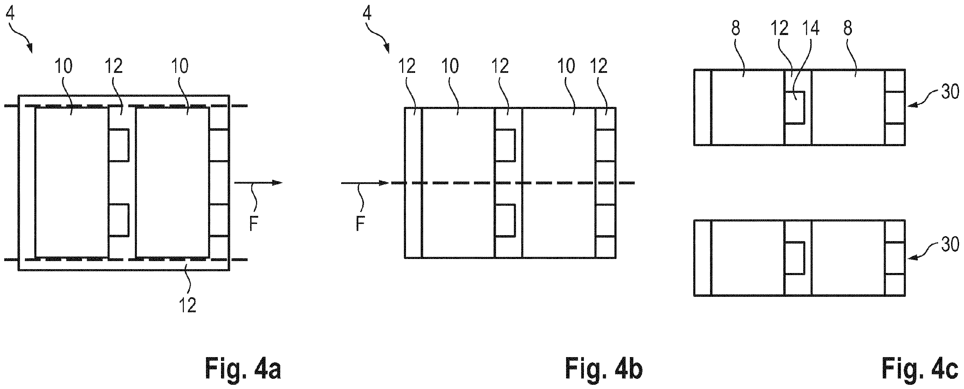

In den Fig. 4a - c ist beispielhaft gezeigt, wie sich eine Faltenbildung vermeiden lässt, indem die Trägerschicht 6 in Förderrichtung F lediglich abschnittsweise mit Elektrodenmaterial 8 beschichtet wird, sodass sich eine intermittierend beschichtete Elektrodenbahn 4 ergibt, mit Freibereichen 12, welche sich quer zur Längsrichtung erstrecken, zusätzlich zu weiteren, seitlichen Freibereichen 12, welche jeweils einen Außenrand bilden. Die gesamte Elektrodenbahn 4 wird wie in Fig. 4a erkennbar zunächst längsgeschnitten, um die Außenränder zu entfernen, wodurch eine Faltenbildung beim nachfolgenden Kalandrieren vermieden wird. Nach dem Kalandrieren wird nochmals wie in Fig. 4b gezeigt mittig längsgeschnitten, um mehrere parallel verlaufende Teilbahnen 30 zu erhalten. Das jeweilige Längsschneiden wird auch als "Schlitzen" oder Englisch "Slitten" bezeichnet und stellt eine zusätzliche Schneidoperation dar, welche mittels eines nicht explizit gezeigten Slitters durchgeführt wird. Abschließend wird eine jeweilige Teilbahn 30 dann wie in Fig. 4c gezeigt quergeschnitten und dadurch in Längsabschnitte zerteilt, um einzelne Elektroden 16 zu erhalten. Kalandern und Schlitzen erfolgen auf zwei unterschiedlichen Anlagen, sodass die Elektrodenbahn 4 dazwischen auf- und wieder abgerollt wird, wodurch sich nachteilige Eigenspannungen im Material bilden. Während einer Erwärmung im Rahmen des Kalandrierens werden diese Spannungen gelöst, wodurch dann üblicherweise dennoch Falten 28 entstehen. Nachteilig ist auch, dass die Elektrodenbahn 4 zweimal längsgeschnitten wird, einmal vor und einmal nach dem Kalandrieren, sodass insgesamt wenigstens drei Bearbeitungsstufen notwendig sind, nämlich erstes Schlitzen, dann Kalandrieren, dann zweites Schlitzen.

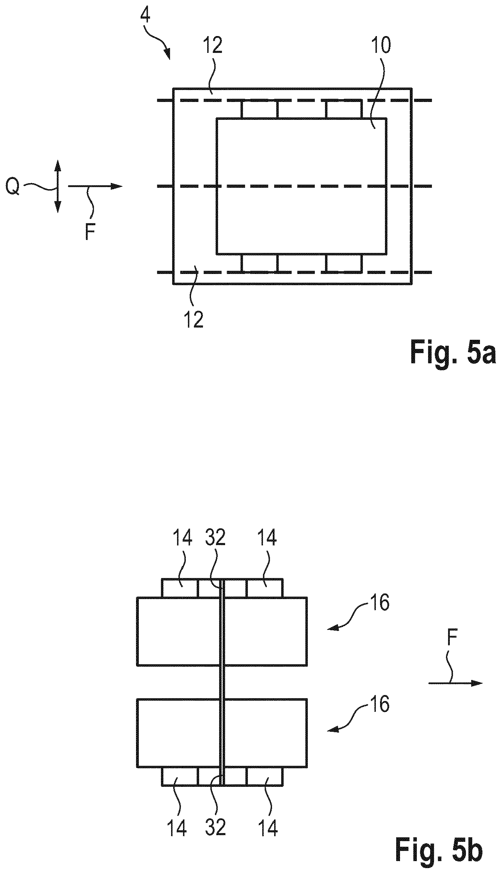

Eine kontinuierlich beschichtete Elektrodenbahn 4 weist im Gegensatz zu einer intermittierend beschichteten Elektrodenbahn 4 einen in Längsrichtung durchgängig ausgebildeten Materialbereich 10 auf und somit in Längsrichtung durchgängig aufgetragenes Elektrodenmaterial 8. In den Fig. 5a, b ist beispielhaft gezeigt, wie sich eine Faltenbildung bei einer kontinuierlich beschichteten Elektrodenbahn 4 verringern lässt, indem während des Kalandrierens, welches noch vor dem in Fig. 5a gezeigten Verfahrensschritt erfolgt, die Elektrodenbahn 4 erwärmt wird und in Kombination mit der Bahnspannung F1 in Längsrichtung etwaige faltengefährdete Bereiche der Elektrodenbahn 4 plastisch verformt werden. Die Erwärmung und plastische Verformung haben auch eine entsprechende Wärmeentwicklung und Kaltverfestigung speziell der Trägerschicht 6 zur Folge, was nachteilig zu einer erhöhten Oxidation führen kann und potentiell die Schweißbarkeit der Trägerschicht 6 verschlechtert. In Fig. 5a wird die Elektrodenbahn sowohl seitlich als auch mittig längsgeschnitten. Während bei einer intermittierend beschichteten Elektrodenbahn 4 die Ableiter 14 zwischen zwei in Längsrichtung aufeinanderfolgenden Materialbereichen 10 ausgebildet werden, werden bei einer kontinuierlich beschichteten Elektrodenbahn 4 die Ableiter 14 wie in Fig. 5b erkennbar seitlich am Materialbereich 10 ausgebildet. Für die endgültige Ausbildung der Ableiter 18 ist ein nachfolgendes, separates Notchen nötig, um die nach dem Schlitzen noch verbleibenden Zwischenbereiche 32 zu entfernen.

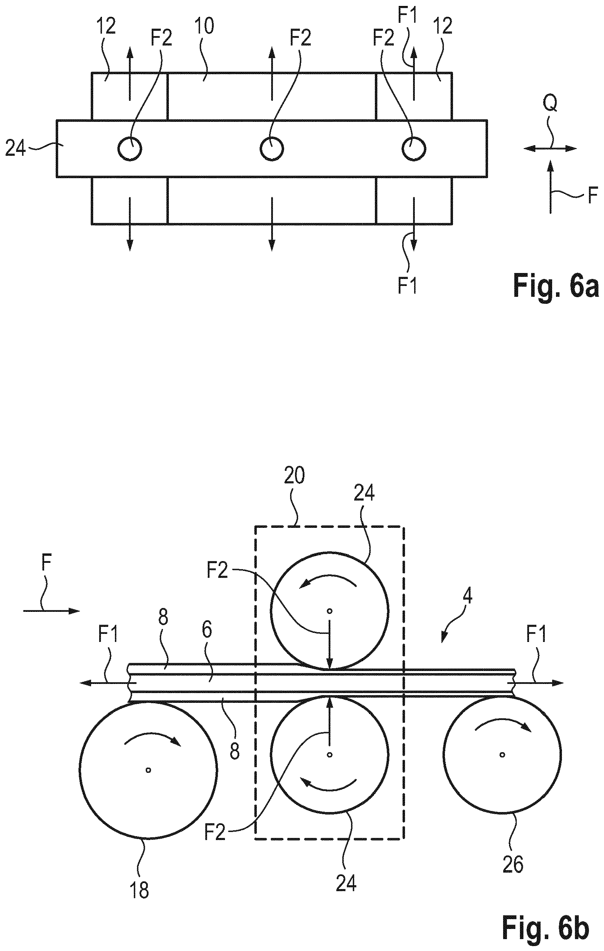

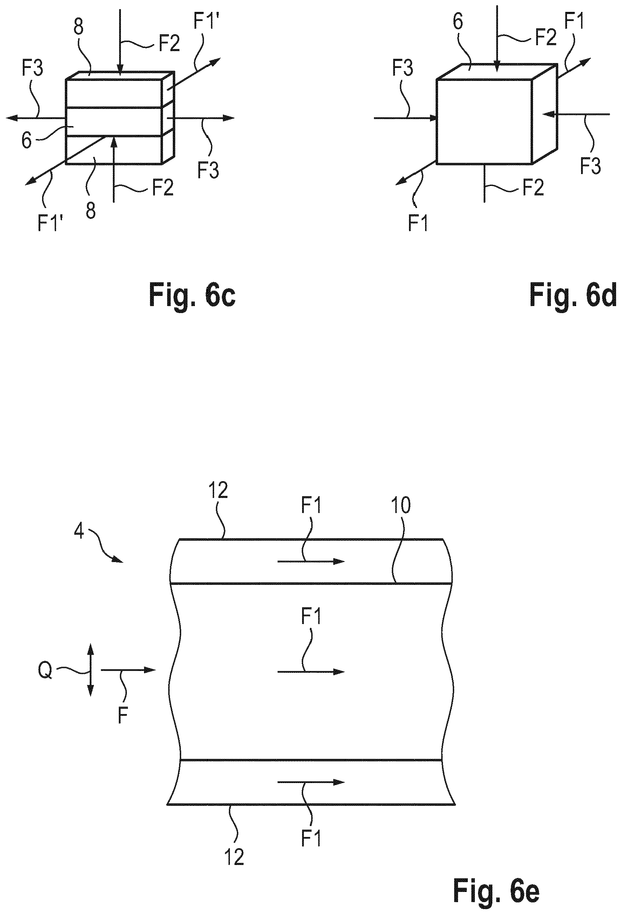

Das Problem einer Faltenbildung beim Kalandrieren soll anhand der Fig. 6a - g genauer erläutert werden. Ausgangspunkt ist die Tatsache, dass die Elektrodenbahn 4 quer zur Längsrichtung betrachtet eine unterschiedliche Dicke d3 aufweist, da das Elektrodenmaterial 8 nur über eine Teilbreite aufgetragen ist. Fig. 6c zeigt ein gedachtes Volumenelement der Elektrodenbahn 4 im Materialbereich 10 und Fig. 6d zeigt ein gedachtes Volumenelement der Elektrodenbahn 4 im Freibereich 12. Die Volumenelemente werden unterschiedlich mit Kräften F1, F1', F2, F3 beaufschlagt. Im Freibereich 12 wirkt zunächst in Längsrichtung die Bahnspannung F1 als Zugspannung. Senkrecht auf die Elektrodenbahn 4, also senkrecht sowohl zur Längs- als auch zur Querrichtung Q wirkt eine Druckspannung F2 des Kalanders 20, allerdings nur im Materialbereich 10, da dieser dicker ist. Im Freibereich 12 wirkt also senkrecht zur Elektrodenbahn 4 keine Kraft. Die Zugspannung in Längsrichtung erzeugt somit eine Druckspannung, d.h. negative Dehnung F3, in Querrichtung Q, d.h. eine negative Dehnung, welche die seitlichen Freibereiche 12 zur Mitte hin zieht. Im Materialbereich 10 ist die Situation dagegen eine andere. Die Bahnspannung F1 wirkt hier zwar ebenso, hinzu kommt jedoch im Kalander 20 die Druckspannung F2, d.h. negative Dehnung, die Bahnspannung F1 typischerweise überwiegt, sodass eine zusätzliche positive Dehnung F3 in Querrichtung Q erzeugt wird, welche den Materialbereich 12 seitlich nach außen treibt. Im Ergebnis werden also die seitlichen Freibereiche 12 zum Materialbereich 10 hin getrieben und umgekehrt der Materialbereich 10 nach außen in Richtung der Freibereiche 12, sodass sich hier entsprechende Falten 28 bilden. Außerdem erzeugt der Kalander 20 aufgrund der Druckspannung hier auch eine zusätzliche positive Dehnung in Längsrichtung, welche den Materialbereich 10 entlang der Längsrichtung vom Kalander 20 forttreibt. In Fig. 6c ist dies dadurch angegeben, dass hier in Längsrichtung nun die Längszugspannung F1' wirkt, welche die Summe aus Bahnspannung F1 und einer zusätzlichen, vom Kalander 20 verursachten, Längszugspannung ist, welche auch als Längsspannungsunterschied dF bezeichnet wird. Für die Freibereiche 12 gilt dies nicht, sodass im Ergebnis der Materialbereich 10 in Längsrichtung, d.h. in Förderrichtung F, gestreckt wird, die Freibereiche 12 jedoch nicht, sodass sich auch hier entsprechende Falten bilden. Die unterschiedlich dicken Bereiche der Elektrodenbahn 4 erfahren demnach unterschiedliche Längsspannungen, also Kräfte in Längsrichtung und quer zur Querrichtung Q.

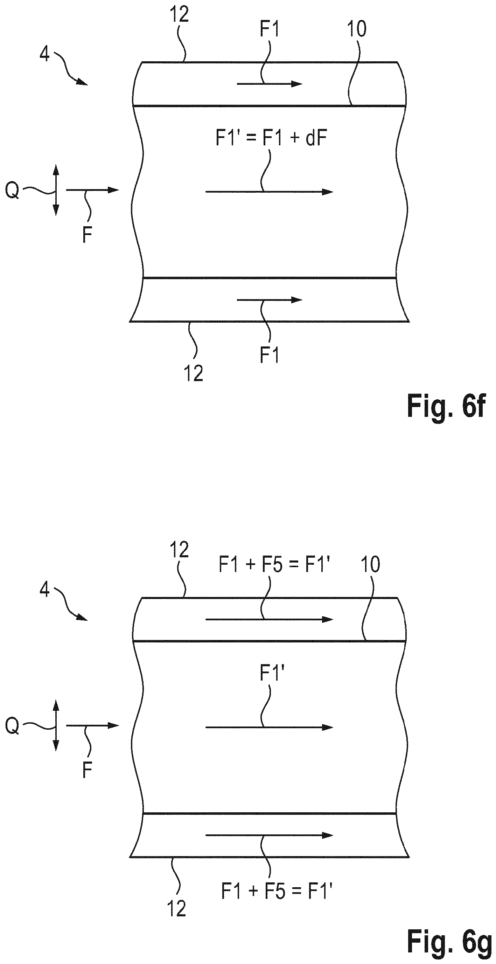

Der Längsspannungsunterschied ergibt sich als Differenz aus Bahnspannung F1 und Längszugspannung F1'. Dies ist in den Fig. 6e - g beispielhaft gezeigt, wobei hier vereinfachend nur die Kräfte in Längsrichtung betrachtet werden. Fig. 6e zeigt die Elektrodenbahn 4 in einer Draufsicht vor dem Kalander 20. Sowohl auf den Materialbereich 10 als auch auf die Freibereiche wirkt zunächst die Bahnspannung F1. Fig. 6f zeigt die Situation im Kalander 20, welcher den Längsspannungsunterschied dF erzeugt, sodass im Materialbereich 10 die Längszugspannung F1' größer ist als im Freibereich 12, wo weiterhin lediglich die Bahnspannung F1 wirkt. Um diesen Längsspannungsunterschied dF auszugleichen, wird in Fig. 6f, z.B. im oder nach dem Kalander 20 und z.B. mittels einer oder mehrerer der Walzen 22 c - f, h, i eine zusätzliche Längszugspannung F5 ausgeübt, um den Längsspannungsunterschied dF auszugleichen, sodass sich auch in den Freibereichern die Längszugspannung F1' ergibt, wie in Fig. 6g erkennbar ist. Möglich und geeignet ist alternativ oder zusätzlich auch eine entsprechend negative Längszugspannung im Materialbereich 20 mittels der Walze 22g.

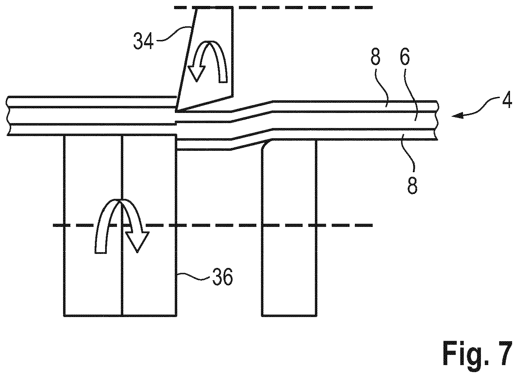

Ein weiteres Problem, nämlich eine Gratbildung beim Schlitzen, soll nachfolgend anhand der Fig. 7 erläutert werden. Grundsätzlich ist es möglich, zum Schlitzen eine Kombination aus zwei Messern 34, 36, nämlich einem Obermesser 34 und einem Untermesser 36, zu verwenden, welche auf gegenüberliegenden Seiten der Elektrodenbahn 4 angeordnet sind, jeweils rotieren und die Elektrodenbahn 4 scherenartig in Längsrichtung zerschneiden. Da die Messer 34, 36 prinzipbedingt aneinander vorbeischeren, wird beim Schneiden das Material der Elektrodenbahn 4 zunächst zwischen die beiden Messer 34, 36 gezogen, d.h. in Richtung einer Schneidkante hier des Obermessers 34, sodass Falten entstehen. Im Bereich der Schneidkante entsteht zudem eine Zugspannung, welche zu einer erhöhten Gratbildung führt. Auch besteht die Gefahr, dass bei fortschreitendem Verschleiß der Messer 34, 36 sich das Material der Elektrodenbahn 4 zunächst wie in Fig. 7 erkennbar aus deren Ebene heraus nach unten in einen Schneidspalt verzieht, bevor es tatsächlich zerschnitten wird. Das Resultat ist eine ungerade Schnittkante. Aufgrund des Vorbeischerens ist auch auf der gegenüberliegenden Seite eines jeweiligen Messers 34, 36 diesem kein Wiederstand entgegensetzt, sodass die Elektrodenbahn 4 entsprechend in diese Richtung unkontrolliert ausweicht und einen Grat bildet. Das Schlitzen ist somit insgesamt sehr undefiniert und erfolgt sehr unkontrolliert.

Vorliegend werden nun durch die zusätzlichen Walzen 22a - i ein oder mehrere der genannten Nachteile behoben. Die hier explizit gezeigte Ausgestaltung der Walzen 22a - i stellt zwar ein bevorzugtes, dabei allerdings nur eines von vielen geeigneten Ausführungsbeispielen dar. Die zusätzlichen Walzen 22a - i rotieren jeweils um eine Drehachse A senkrecht zur Förderrichtung F und sind jeweils entweder auf einer Oberseite oder einer Unterseite der Elektrodenbahn 4 angeordnet, sodass diese über eine Mantelfläche M der jeweiligen Walze 22a - i geführt wird. Die Drehrichtung einer jeweiligen Walze 22a - i ist durch einen entsprechenden Pfeil um die jeweilige Drehachse A herum angedeutet.

In dem Ausführungsbeispiel der Fig. 1 weist die Bearbeitungsvorrichtung 2 eine Bahnzufuhr 38 zur Zufuhr der Elektrodenbahn 4 auf und eine Bahnaufnahme 40 zur Aufnahme der bearbeiteten Elektrodenbahn 4. Die Bahnzufuhr 38 ist hier der Abwickler 18 in Kombination mit einer Gegenwalze 42, welche die Elektrodenbahn 4 an den Abwickler 18 andrückt. Die Bahnaufnahme 40 ist analog eine Kombination des Aufwickler 26 mit einer Gegenwalze 44 auf, welche die jeweilige Teilbahn 30 an den Aufwickler 26. Der Aufwickler 26 und der Abwickler 18 erzeugen in Förderrichtung F die Bahnspannung F1, was in Fig. 1 durch entsprechende Pfeile um die Drehachsen A angedeutet ist.

Zwischen der Bahnzufuhr 38 und der Bahnaufnahme 40 weist die Bearbeitungsvorrichtung 2 mehrere Bearbeitungsstufen B1 - B4 auf, von welchen hier zwei durch den Kalander 20 mit den Walzen 22c - f, h, i gebildet werden und die übrigen beiden jeweils durch die Walzen 22a, b, g. Mittels der vier Bearbeitungsstufen B1 - B4 wird jeweils ein Verfahrensschritt des Verfahrens ausgeführt. Die hier gezeigte Kombination der Bearbeitungsstufen B1 - B4 miteinander und deren relative Lage zueinander stellen eine geeignete Ausgestaltung dar, sind in dieser Form an sich aber nicht zwingend, sodass sich weitere geeignete Ausgestaltungen durch Auslassen oder Hinzufügen einer oder mehrerer Bearbeitungsstufen B1 - B4 sowie durch andere Kombinationen und/oder relative Lagen der Bearbeitungsstufen B1 - B4 zueinander ergeben.

Die in Fig. 1 gezeigte Bearbeitungsvorrichtung 2 weist in Förderrichtung F hinter der Bahnzufuhr 38 eine erste Bearbeitungsstufe B1 auf, mit einer Walze 22a, welche derart ausgebildet ist, dass diese am Freibereich 12 angreift und in diesem eine Querzugspannung F4 ausübt und zugleich im Freibereich 12 wiederkehrend Ableiter 14 ausbildet. Die erste Bearbeitungsstufe B1 ist in Fig. 8 in einer Ansicht entlang der Förderrichtung F gezeigt, sodass die Querrichtung Q in der Zeichnungsebene liegt. Die Walze 22a ist sowohl eine Querzugwalze als auch eine Schneidwalze, mit einem Innenabschnitt 46 für den Materialbereich 10 und zwei seitlichen Außenabschnitten 48, zum Ausüben einer Querzugspannung F4 in den seitlichen Freibereichen 12. Auf der gegenüberliegenden Seite der Elektrodenbahn 4 ist eine weitere Walze 24b angeordnet, welche einerseits ebenfalls eine Querzugwalze ist und andererseits eine Gegenwalze für ein Trennwerkzeug 50 der anderen Walze 22a. Die erste Bearbeitungsstufe B1 ist somit insgesamt ein Walzenpaar und realisiert einen ersten Verfahrensschritt, welcher in Fig. 2b gezeigt ist und in welchem die Elektrodenbahn 4 genotcht wird, d.h. in welchem seitlich Ableiter 14 ausgebildet werden. Aus dem jeweiligen Freibereich 12 werden unter Einfluss von Querzugspannung F4 einerseits und Bahnspannung F1 andererseits wiederkehrend Ableiter 14 geschnitten. Die Walzen 22a, b erzeugen dabei so viel Querzugspannung F4, dass Falten geglättet werden oder erst gar nicht entstehen. Zugleich wird durch die Querzugspannung F4 der Verschnitt, welcher beim Zerteilen im Freibereich 12 anfällt, seitlich abgeführt. Optional wird mittels einer oder beider Walzen 22a, b auch eine zusätzliche Längszugspannung F5 erzeugt, um einen vom Kalander 20 verursachten Längsspannungsunterschied dF auszugleichen.

Weiter weist die Bearbeitungsvorrichtung 2 in Fig. 1 eine zweite Bearbeitungsstufe B2 auf, welche genauer und in einer Ansicht entlang der Förderrichtung F in Fig. 9 gezeigt ist, sodass die Querrichtung Q in der Zeichnungsebene liegt. Die zweite Bearbeitungsstufe B2 weist zwei Kalanderwalzen 24 des Kalanders 20 auf gegenüberliegenden Seiten der Elektrodenfolie 4 auf, zum Verdichten des Elektrodenmaterials 8. Die zusätzlichen Walzen 22c, d, e, f sind hierbei als Querzugwalzen ausgebildet und je seitlich einer der Kalanderwalzen 24 angeordnet. Somit weist die Bearbeitungsvorrichtung 2 in der zweiten Bearbeitungsstufe B2 hier insgesamt vier zusätzliche Walzen 22c - f derart auf, dass eine jeweilige der beiden Kalanderwalzen 24 in Querrichtung Q beidseitig von zwei der zusätzlichen Walzen 22c - f, d.h. von zwei Querzugwalzen, eingefasst ist und mit diesen eine gemeinsame Drehachse A aufweist. Die jeweilige Kalanderwalze 24 ist lediglich so breit wie der Materialbereich 10 und wirkt lediglich auf ebendiesen Materialbereich 10, sodass die zusätzlichen Walzen 22c - f lediglich auf die Freibereiche 12 wirken. Die zweite Bearbeitungsstufe B2 folgt hier auf die erste Bearbeitungsstufe B1, sodass das Kalandrieren nach dem Notchen erfolgt und die Querzugwalzen der zweiten Bearbeitungsstufe B2 auf die bereits ausgebildeten Ableiter 14 wirken. Auch die zweite Bearbeitungsstufe B2 ist insgesamt ein Walzenpaar. Durch die zweite Bearbeitungsstufe B2 wird ein zweiter Verfahrensschritt wie in Fig. 2c gezeigt realisiert, in welchem das Elektrodenmaterial 8 unter Einfluss von Querzugspannung F4 einerseits und Bahnspannung F1 andererseits faltenfrei verdichtet wird. Dabei wird eine Querzugspannung F4 lediglich seitlich in den Freibereichen 12 durch die seitlichen Walzen 22c - f erzeugt, während mittig das Elektrodenmaterial 8 von den Kalanderwalzen 24 kalandriert wird. Optional wird mittels einer oder mehrerer der Walzen 22c - f auch eine zusätzliche Längszugspannung F5 erzeugt, um einen vom Kalander 20 verursachten Längsspannungsunterschied dF direkt im Kalander 20 auszugleichen.

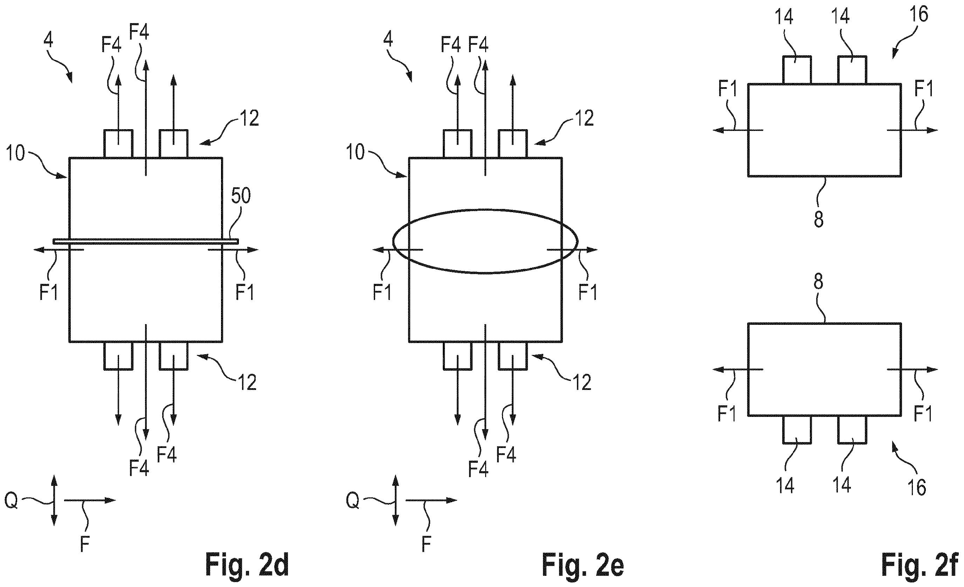

Weiter weist die Bearbeitungsvorrichtung 2 in Fig. 1 eine dritte Bearbeitungsstufe B3 auf, welche genauer und in einer Ansicht entlang der Förderrichtung F in Fig. 10 gezeigt ist, sodass die Querrichtung Q in der Zeichnungsebene liegt. Die dritte Bearbeitungsstufe B3 weist eine Walze 22g auf, in welche ein Trennwerkzeug 50 integriert ist, zur Bearbeitung der Trägerschicht 6 derart, dass diese mittels des Trennwerkzeugs 50 zerteilt wird. Zugleich ist die Walze 22g derart ausgebildet, dass diese am Materialbereich 10 angreift und in diesem eine Querzugspannung F4 nach beiden Seiten hin und nach außen ausübt. Die Walze 22g ist demnach eine Querzugwalze und gleichzeitig auch eine Schneidwalze, nämlich genauer ein Slitter zur Erzeugung von Teilbahnen 30. Optional wird mittels der Walze 22g auch eine zusätzliche Längszugspannung F5 erzeugt, um einen vom Kalander 20 verursachten Längsspannungsunterschied dF auszugleichen. Auf der gegenüberliegenden Seite der Elektrodenbahn 4 ist eine der Kalanderwalzen 24 als eine Gegenwalze angeordnet. Zusätzlich ist gegenüber der Walze 22g eine Unterstützungswalze 52 vorhanden. Die dritte Bearbeitungsstufe B3 folgt auf die zweite Bearbeitungsstufe B2 und realisiert einen dritten Verfahrensschritt wie in Fig. 2d gezeigt, in welchem die Elektrodenbahn 4 geschlitzt wird, d.h. in welchem durch einen hier sogar mittigen Längsschnitt mehrere Teilbahnen 30 ausgebildet werden. Die Elektrodenbahn 4 wird demnach unter Einfluss von Querzugspannung F4 einerseits und Bahnspannung F1, gegebenenfalls in Kombination mit einer zusätzlichen Längszugspannung F5, andererseits in mehrere Teilbahnen 30 zerteilt. Die Walze 22g erzeugt abseits davon im Gegensatz zu den Kalanderwalzen 24 lediglich eine normale Druckspannung F2 derart, so beim Slitten das Elektrodenmaterial 8 zunächst nicht weiter verdichtet wird.

Weiter weist die Bearbeitungsvorrichtung 2 in Fig. 1 eine vierte Bearbeitungsstufe B4 auf, welche genauer und in einer Ansicht entlang der Förderrichtung F in Fig. 11 gezeigt ist, sodass die Querrichtung Q in der Zeichnungsebene liegt. Die vierte Bearbeitungsstufe B4 weist wie die zweite Bearbeitungsstufe B2 wiederum zwei Kalanderwalzen 24 des Kalanders 20 auf gegenüberliegenden Seiten der Elektrodenbahn 4 auf, zum erneuten Verdichten des Elektrodenmaterials 8. Die zweite und vierte Bearbeitungsstufe B2, B4 bilden den Kalander 20 somit als zweistufigen Kalander 20 aus. Dabei wird eine der Kalanderwalzen 24 zusammen mit deren seitlichen Walzen 22c, d doppelt verwendet. Analog zur zweiten Bearbeitungsstufe B2 sind in der vierten Bearbeitungsstufe B4 die zusätzlichen Walzen 22c, d, h, i jeweils als Querzugwalze ausgebildet und seitlich einer jeweiligen Kalanderwalze 24 angeordnet, sodass eine jeweilige Kalanderwalze 24 in Querrichtung Q beidseitig von zwei Querzugwalzen eingefasst ist und mit diesen eine gemeinsame Drehachse A aufweist. Die Kalanderwalze 24 ist lediglich so breit wie der Materialbereich 10, sodass die Querzugwalzen lediglich auf den Freibereich 12 wirken. Die vierte Bearbeitungsstufe B4 folgt auf die dritte Bearbeitungsstufe B3, sodass nach dem Slitten in der dritten Bearbeitungsstufe B3 das Elektrodenmaterial 8 der Teilbahnen 30 weiter verdichtet wird. Durch die vierte Bearbeitungsstufe B4 wird ein vierter Verfahrensschritt wie in Fig. 2e gezeigt realisiert, in welchem die Teilbahnen 30 kalandriert werden und eventuelle Grate aus der dritten Bearbeitungsstufe B3 gequetscht werden. Auch dies erfolgt unter Einfluss von Querzugspannung F4 einerseits und Bahnspannung F1 andererseits. Analog zur zweiten Bearbeitungsstufe B2 wird eine Querzugspannung F4 lediglich seitlich im Freibereich 12 durch die seitlichen Querzugwalzen 22c, d, h, i erzeugt, während mittig das Elektrodenmaterial 8 von den Kalanderwalzen 24 kalandriert wird. Ebenfalls analog zur zweiten Bearbeitungsstufe B2 wird optional mittels einer oder mehrerer der Walzen 22c, d, h, i auch eine zusätzliche Längszugspannung F5 erzeugt, um einen vom Kalander 20 verursachten Längsspannungsunterschied dF direkt im Kalander 20 auszugleichen.

Vor dem Aufwickler 26 und nach den vorgenannten Bearbeitungsstufen B1 - B4 ist in Fig. 1 eine optional Reinigungsstufe B5 angeordnet, mittels welcher die Teilbahnen 30 in einem fünften Verfahrensschritt gereinigt werden. Nach dem Aufwickler 26 werden die Teilbahnen 30 im gezeigten Ausführungsbeispiel zu Elektroden 16 wie in Fig. 2f gezeigt vereinzelt, indem die Teilbahnen 30 mittels eines nicht explizit gezeigten, quer verlaufenden Trennwerkzeugs in geeignet lange Längsabschnitte zerteilt werden, welche dann jeweils eine Elektrode 16 darstellen.

Wie aus dem obigen Ausführungen deutlich wird, ist eine jeweilige Walze 22a - i derart ausgebildet, dass diese zur Bearbeitung der Trägerschicht 6 auf die Elektrodenbahn 4 und speziell auf die Trägerschicht 6 eine Querzugspannung F4 und gegebenenfalls auch eine Längszugspannung F5 ausübt, um eine Faltenbildung zu vermeiden. Die Walze 22a - i wird daher auch als Querzugwalze bzw. Querzug- und Längsspannungswalze bezeichnet, nachfolgend wird ohne Beschränkung der Allgemeinheit lediglich der Begriff "Querzugwalze" verwendet. Die Querzugspannung F4 ist eine Kraft, welche quer, d.h. hier senkrecht, zur Längsrichtung und somit auch zur Förderrichtung F wirkt. Die Querzugspannung F4 wirkt seitlich nach außen hin und drückt also die Trägerschicht 6 ausgehend von einer Mitte der Elektrodenbahn 4 jeweils nach außen zur Seite hin. Die Elektrodenbahn 4 und speziell deren Trägerschicht 6 werden mittels der Walze 22a - i demnach in Querrichtung Q gestreckt oder gestrafft und sozusagen glattgezogen. Die Längszugspannung F5 wirkt dagegen entlang der Längsrichtung und der Förderrichtung F und somit quer zur Querzugspannung Q. Die Elektrodenbahn 4 und speziell deren Trägerschicht 6 werden dann je nach Ausgestaltung mittels der Walze 22a - i in Längsrichtung gestreckt oder gestaucht und ebenfalls sozusagen glattgezogen.

Die Querzugspannung F4 und auch die Längszugspannung F5 lässt sich durch die konkrete Ausgestaltung der Walze 22a - i bedarfsgerecht einstellen und auf den konkreten Anwendungsfall anpassen. Insbesondere sind die Querzugspannung F4 und die gegebenenfalls zusätzliche Längszugspannung F5, welche zur optimalen Vermeidung von Falten verwendet werden, abhängig von der Dicke d3 der Elektrodenbahn 4 im Materialbereich 10 und dessen Verdichtung im Kalander 20, d.h. der Druckspannung F2 im Kalander 20, aber auch abhängig von der Bahnspannung F1 in Förderrichtung F.

Die Walzen 22a - f, h, i sind wie bereits beschrieben derart ausgebildet, dass diese am Freibereich 12 angreifen und in diesem die Querzugspannung F4 und optional zusätzliche die Längszugspannung F5 ausüben. Dagegen ist die Walze 22g in Fig. 10 anders ausgebildet, nämlich derart, dass diese am Materialbereich 10 angreift und in diesem die Querzugspannung F4 ausübt und optional auch eine zusätzliche Längszugspannung F5, zweckmäßigerweise mit gegenüber dem Freibereich 12 umgekehrter Richtung. Hierzu weist die Walze 22g in Querrichtung Q und entlang ihrer Drehachse A betrachtet zwei Querabschnitte 54 auf, nämlich einen linksseitigen Abschnitt, welcher sich ausgehend von der Mitte des Materialbereichs 10 in Querrichtung Q zur einen Seite erstreckt, und einen rechtsseitigen Abschnitt, welcher sich entsprechend ausgehend von der Mitte des Materialbereichs 10 in Querrichtung Q zur anderen Seite erstreckt. Die beiden Querabschnitte 54 üben nun jeweils eine Querzugspannung F4 in zueinander entgegengesetzter Richtung aus, sodass der Materialbereich 10 ausgehend von der Mitte zu beiden Seiten nach außen gestreckt oder getrieben wird. Im Falle einer zusätzlichen Längszugspannung L5 wird diese dagegen von beiden Abschnitten der Walze 22g gleichermaßen ausgeübt.

Zum Ausüben der Querzugspannung F4 und gegebenenfalls auch der Längszugspannung F5 ist die jeweilige Walze 22a, b derart ausgebildet, dass diese auf den Freibereich 12 eine größere Druckspannung F1 ausübt als auf den Materialbereich 10. Hierzu weist die Walze 22a, b, i im Freibereich 12 einen größeren Durchmesser auf als im Materialbereich 10, indem ein jeweiliger Außenabschnitt 48 einen größeren Durchmesser aufweist als der Innenabschnitt 46. Dasselbe gilt analog für die Kombination der Walzen 22c - f, h, i als Außenabschnitte 48 mit den Kalanderwalzen 24 als Innenabschnitte 46.

Außerdem weist im gezeigten Ausführungsbeispiel eine jeweilige Walze 22a - i zum Ausüben der Querzugspannung F4 und gegebenenfalls auch der Längszugspannung F5 eine Mantelfläche M auf, welche ganz oder teilweise aus einem Gummi hergestellt ist, z.B. aus einem Polyurethan. In Umlaufrichtung um die Walze 22a - i herum ist das Gummi durchgängig, d.h. unterbrechungsfrei ausgebildet. Bei den Walzen 22a, b ist die Mantelfläche M lediglich entlang des jeweiligen Außenabschnitts 48 aus Gummi hergestellt. Die Walzen 22a, b weisen beispielsweise je einen zylindrischen Grundkörper auf, welcher entlang eines jeweiligen Außenabschnitts 48 mit einer Gummischicht ummantelt ist, sodass sich hier eine Mantelfläche M aus Gummi ergibt, während entlang des Innenabschnitts 46 die Mantelfläche M aus dem Material des Grundkörpers gebildet ist. Durch das Ummanteln mit Gummi weist dann ein jeweiliger Außenabschnitt 48 auch automatisch einen größeren Durchmesser auf als der Innenabschnitt 46, wobei die Differenz dieser Durchmesser einer Dicke der Gummischicht entspricht. Dies lässt sich analog auch auf die Kalanderwalzen 24 anwenden, sofern diese sich in Querrichtung über den Materialbereich 10 hinaus erstrecken und dann im Freibereich 12 entsprechend mit einer Gummischicht versehen sind, sodass hier dann Walzen 22c - f, h, i mit einer Mantelfläche M aus Gummi ausgebildet sind.

Zusätzlich weisen die Walzen 22a - i zum Ausüben der Querzugspannung F4 und gegebenenfalls auch der Längszugspannung F5 hier noch eine texturierte Mantelfläche M auf, d.h. eine außenumfängliche Textur auf, durch welche auf die Elektrodenbahn 4, speziell deren Trägerschicht 6, eine Querzugspannung F4 erzeugt wird. In den Fig. 8-11 weist texturierte Mantelfläche M Erhebungen oder Vertiefungen 56 oder beides auf, sodass die Reibung der Walze 22a - i zumindest im Bereich der texturierten Mantelfläche M entsprechend erhöht ist. Die Textur umfasst beispielsweise eine Vielzahl an Stegen und/oder Nuten, welche wie in den Fig. 8-11 erkennbar zueinander parallel und jeweils gerade verlaufen. Die entsprechenden Erhebungen und/oder Vertiefungen 56 auf beiden Mantelflächen M sind hier komplementär zueinander ausgebildet, sodass einer Vertiefung 56 auf der Mantelfläche der hier jeweils auf der Oberseite angeordneten Walze 22a, e, f, h, i eine Erhebung 56 auf der entsprechenden gegenüberliegenden Unterseite angeordneten Walze 22b, c, d gegenüberliegt, insbesondere derart, dass diese ineinandergreifen. Die Walze 22g ist vorliegend mit Erhebungen 56 ausgebildet, sodass diese in dem Elektrodenmaterial 8 entsprechende Vertiefungen ausbildet.

Die Textur ist in einem Anstellwinkel W relativ zur Förderrichtung F angestellt, sodass sich beim Drehen der Walze 22a - i und deren Angreifen an der Elektrodenbahn 4 eine entsprechende Querzugspannung F4 und gegebenenfalls auch eine entsprechende Längszugspannung F5 ergibt, wie beispielhaft in Fig. 8 gezeigt ist. Der Anstellwinkel W wird vorliegend derart eingestellt, dass die resultierende Querzugspannung F4 und gegebenenfalls auch die Längszugspannung F5 die Kräfte durch Druckspannung F2 im Kalander 20 und Bahnspannung F1 in der Bearbeitungsvorrichtung 2 allgemein ausgleichen und dadurch eine Faltenbildung verhindern. Der Anstellwinkel W ist dabei abhängig von der Dicke d2 des Elektrodenmaterials 8 sowie der im Kalander 20 vorgesehenen Verdichtung.

Der Anstellwinkel W entspricht hier demjenigen Winkel, in welchem die Falten 28 verlaufen, welche erzeugt würden, wenn keine zusätzliche Querzugspannung F4 mittels der Walzen 22a - i erzeugt würde. Der Anstellwinkel W wird beispielsweise dadurch eingestellt, dass aus einem Satz von Walzen mit unterschiedlich texturierter Mantelfläche M eine geeignete Walze 22a - i ausgewählt wird und in die Bearbeitungsvorrichtung 2 eingesetzt wird. Alternativ ist lediglich die Gummischicht austauschbar und zum Einstellen des Anstellwinkels W wird ähnlich einem Reifenwechsel lediglich die Gummischicht auf dem Grundkörper ausgetauscht.

Die Textur ist hier außerdem eine Mikrostruktur, d.h. die Erhebungen und Vertiefungen 56 weisen lediglich geringe Abmessungen A1, A2, A3 auf. In den Fig. 8-11 weisen die Erhebungen und/oder Vertiefungen 56 der texturierten Mantelfläche M eine Höhe beziehungsweise Tiefe A1 zwischen 50 µm und 1000 µm auf, eine Breite A2 zwischen 100 µm und 500 µm und eine Länge A3 zwischen 3000 µm und 5000 µm. In den Figuren sind Erhebungen und/oder Vertiefungen 56 mit einer Geometrie gezeigt, welche gerade ist, dies ist aber nicht zwingend, sondern in einer Variante ist die Geometrie angepasst ist an die Geometrie der Falten 28 und entspricht dieser.

In der zweiten, dritten und vierten Bearbeitungsstufe B2, B3, B4 werden Walzen 22c - i mit texturierter Mantelfläche M verwendet, welche möglicherweise eine Struktur oder Profilierung der Trägerschicht 6 und/oder des Elektrodenmaterials 8 erzeugen. Durch die texturierte Mantelfläche M wird also im Freibereich 12 und/oder im Materialbereich 10 ein nicht explizit gezeigtes Muster eingeprägt. Dies wird vorliegend zumindest im Materialbereich 12 mittels der vierten Bearbeitungsstufe B4 ausgeglichen, d.h. die Elektrodenbahn 4 wird mit der vierten Bearbeitungsstufe B4 geglättet. Hierzu weisen in der vierten Bearbeitungsstufe B4 die Kalanderwalzen 24 wie in Fig. 11 gezeigt keine texturierte, sondern eine glatte Mantelfläche M auf, um das Elektrodenmaterial 8 im Materialbereich 10 zu glätten, nachdem dieses in der dritten Bearbeitungsstufe B3 von der Walze 22g mit texturierter Mantelfläche M möglicherweise strukturiert oder profiliert wurde. Auch die übrigen Kalanderwalzen 24 weisen vorliegend jeweils eine glatte Mantelfläche M auf.

In den Ausgestaltungen gemäß den Fig. 9 - 11 weisen die oberen Walzen 22e, f zur oberen Kalanderwalze 24 jeweils eine texturierte Mantelfläche M mit Vertiefungen 56 auf und die mittleren Walzen 22c, d zur mittleren Kalanderwalze 24 weisen jeweils eine texturierte Mantelfläche M mit Erhebungen 56 auf, welche hier auch derart ausgebildet sind, dass diese beim Hindurchfördern der Elektrodenbahn 4 in die Vertiefungen 56 der gegenüberliegenden Walzen e, f eingreifen. Auf diese Weise wird auf der Oberseite der Elektrodenbahn 4 im Freibereich 12 eine vorstehende Profilierung oder Struktur ausgebildet, welche von der Unterseite betrachtet entsprechende Vertiefungen 56 darstellt. Die unteren Walzen 22h, i zur unteren Kalanderwalze 24 weisen ebenfalls eine texturierte Mantelfläche M mit Vertiefungen 56 auf, sodass diese in die Erhebungen 56 der mittleren Walzen 22c, d eingreifen. Zugleich glättet die untere Kalanderwalze 24 eine mögliche Profilierung des Elektrodenmaterials 8, welches zuvor durch die Erhebungen 56 der Walze 22g strukturiert wurde, nämlich mit Vertiefungen auf der Oberseite der Elektrodenbahn 4.

Die beiden Walzen 22a, b sowie die Walzen 22c - f, h, i sind hinsichtlich der Erzeugung der Querzugspannung F4 und gegebenenfalls auch der Längszugspannung F5 gleichartig ausgebildet, speziell mit gleichen Abmessungen, gleichen Texturen und gleichen Materialien, wobei sich die Texturen jedoch dadurch unterscheiden können, dass auf einer Seite der Elektrodenbahn 4 Vertiefungen 56 ausgebildet sind und auf der anderen Seite Erhebungen 56. Die Walze 22a ist diesbezüglich spiegelbildlich zur Walze 22b ausgebildet, wobei die Elektrodenbahn 4 eine Spiegelebene bildet. Ebenso so sind die Walzen 22c, d spiegelbildlich zu den Walzen 22e, f, h, i ausgebildet. Die Walzen 22a, b weisen entgegengesetzte Drehrichtungen auf, ebenso weisen die Walzen 22c, d eine Drehrichtung entgegengesetzt zur Drehrichtung der Walzen 22e, f, h, i auf. Die Walze 22g weist eine gegenüber der Walzen 22c, d entgegengesetzte Drehrichtung auf.

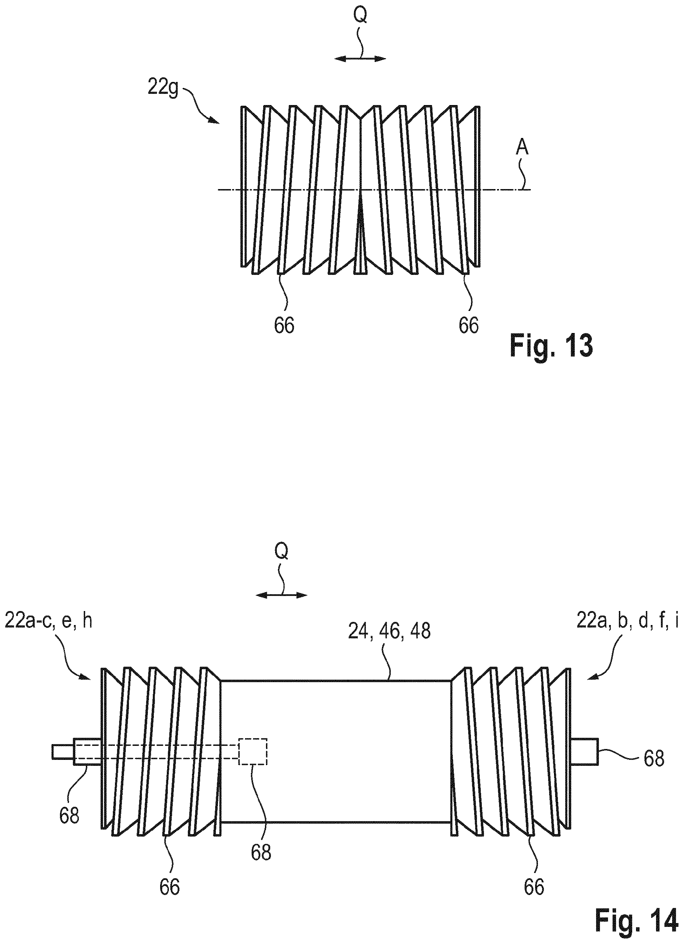

Alternativ oder zusätzlich ist die Walze 22a - i zum Ausüben der Querzugspannung F4 und gegebenenfalls auch der Längszugspannung F5 schraubenförmig ausgebildet, d.h. schneckenförmig, gewindeförmig, helixförmig oder dergleichen. Ausführungsbeispiele hierfür sind in den Fig. 13 und 14 gezeigt, wobei Fig. 13 ein Ausführungsbeispiel für eine schraubenförmige Walze 22g zeigt und Fig. 14 ein Ausführungsbeispiel für eine schraubenförmige Walze 22a - f, h, i. Die Fig. 13 und 14 zeigen die jeweilige Walze 22a - i entlang der Förderrichtung F betrachtet, d.h. von vorn oder hinten. Die Walze 22a - i weist eine Mantelfläche M auf, mit einem Steg 66, welcher helixartig um die Walze 22a - i herumläuft, sodass diese insgesamt schraubenförmig ausgebildet ist, wobei dann der Steg 66 sozusagen ein Gewinde bildet. Äquivalent zu einem Steg 66 sind eine Kante, ein Vorsprung oder dergleichen. Der Steg 66 ist hier an sich ähnlich zu den oben beschriebenen Stegen der Textur der Mantelfläche M, allerdings typischerweise größer und entsprechend ist bereits ein einzelner Steg 66 ausreichend. Durch die schraubenförmige Ausgestaltung wird eine Förderwirkung in Querrichtung Q erzielt, mittels welcher dann die Querzugspannung F4 erzeugt wird und optional auch die Längszugspannung F5. Die Elektrodenbahn 4 wird demnach von der schraubenförmigen Walze in Querrichtung Q getrieben und somit glattgezogen. Der Steg 66 der Walze 22a - i verläuft entweder links- oder rechtsdrehend, je nachdem, wo die Walze 22a - i relativ zur Elektrodenbahn 4 angeordnet ist und in welcher Richtung eine zusätzliche Kraft benötigt wird, um Falten zu glätten oder zu vermeiden. In Fig. 13 greift die Walze 22g am Materialbereich 10 an und ist daher hinsichtlich der schraubenförmigen Ausgestaltung spiegelsymmetrisch ausgebildet bezüglich einer Spiegelebene, welche senkrecht zur Querrichtung Q ist. Auf diese Weise verläuft dann der Steg 66 wie in Fig. 13 gezeigt auf einer ersten Hälfte der Walze 22g linksdrehend und auf einer zweiten Hälfte rechtsdrehend.

Alternativ oder zusätzlich zu den vorgenannten Konzepten, mittels Reibung eine Längszugspannung F5 auszuüben, weist die Walze 22a - i zum Ausüben der Längszugspannung F5 in einer Variante einen Antrieb 68 auf, z.B. einen Elektromotor. Ein solcher Antrieb 68 wird beispielsweise verwendet, falls ein Ausgleich des Längsspannungsunterschieds dF allein mittels Reibung wie beschrieben nicht möglich ist. Der Antrieb 68 dreht die Walze 22a - i und erzeugt so einen Schlupf relativ zur Kalanderwalze 24 und eine entsprechende Kraft auf die Elektrodenbahn 4 in oder entgegen der Förderrichtung F und somit letztendlich eine zusätzliche Längszugspannung F5. Sofern die Walze 22c - f, h, i innerhalb des Kalanders 20 und neben einer Kalanderwalze 24 angeordnet ist und mit dieser Kalanderwalze 24 eine gemeinsame Drehachse A aufweist, weisen die Walze 22c - f, h, i und die Kalanderwalze 24 dann wie beispielhaft in Fig. 14 gezeigt voneinander getrennte Antriebe 68 auf, sodass die Walze 22c - f. h. i und die Kalanderwalze 24 mit unterschiedlichen Geschwindigkeiten drehbar sind, um den Längsspannungsunterschied dF auszugleichen.

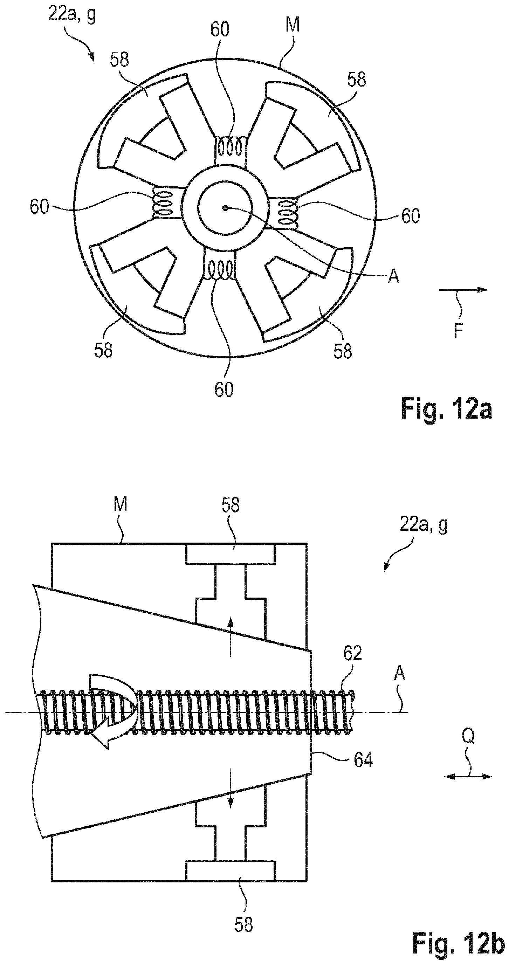

Das jeweilige Trennwerkzeug 50 ist hier ein Messer mit einer Anzahl von Klingen 58, wobei unter "eine Anzahl von" "ein oder mehrere" verstanden wird. Ein Beispiel für eine Walze 22a, g mit einem Trennwerkzeug 50 ist in Fig. 12a in einer Schnittansicht senkrecht zur Drehachse A gezeigt und in Fig. 12b in einer Schnittansicht entlang der Drehachse A. Die Walze Sofern die Bearbeitung lediglich im Freibereich 12 erfolgt, wird mit dem Trennwerkzeug 50 auch lediglich die Trägerschicht 6 zerteilt. Sofern die Bearbeitung im Materialbereiche 10 erfolgt, wird zusätzlich zur Trägerschicht 6 prinzipbedingt auch das Elektrodenmaterial 8 zerteilt.

Um wie in Fig. 2b in der ersten Bearbeitungsstufe B1 mittels des Trennwerkzeugs 50 die Trägerschicht 6 im Freibereich 12 derart zu zerteilen, dass wiederkehrend Ableiter 14 ausgebildet werden, werden mittels des Trennwerkzeugs 50 der Walze 22a wiederkehrend erste Längsabschnitte des Freibereichs 12 herausgetrennt, sodass Lücken entstehen, zwischen welchen zweite Längsabschnitte des Freibereichs 12 als Ableiter 14 stehen gelassen werden. Dadurch wird die Elektrodenbahn 4 genotcht, sodass ein nachträgliches Notchen nicht mehr nötig ist. Dadurch ergibt sich seitlich eine rechtecksignalförmige Seitenkante. Das Trennwerkzeug 50 weist entsprechend eine Anzahl von Längsklingen auf, welche in Längsrichtung schneiden, und eine Anzahl von Querklingen, welche in Querrichtung schneiden. Die Längsklingen sind in Umlaufrichtung der Walze 22a abwechselnd innen und außen angeordnet, um entsprechend Längsabschnitte abzutrennen oder stehen zu lassen. In Umlaufrichtung zwischen zwei Längsklingen ist eine Querklinge angeordnet, um aufeinanderfolgende Längsabschnitte des Freibereichs 12 voneinander zu trennen.

Um wie in Fig. 2d gezeigt die Trägerschicht 6 mittels des Trennwerkzeugs 50 im Materialbereich 10 in der dritten Bearbeitungsstufe B3 derart entlang der Längsrichtung mittig zu zerteilen, dass mehrere Teilbahnen 30 ausgebildet werden, welche nebeneinander verlaufen, weist das Trennwerkzeug 50 der Walze 22g eine Anzahl von Klingen 58 auf, welche entlang einer gemeinsamen Umfangslinie um die Walze 22g herum und in Umlaufrichtung hintereinander angeordnet sind, sodass sich ein gerader Schnitt in Förderrichtung F ergibt.

Vorliegend weist das in Fig. 12a, b gezeigte Trennwerkzeug 50 eine einstellbare Schnitttiefe auf, indem die Klingen 58 in die Walze 22a, g einfahrbar oder aus dieser ausfahrbar sind. In der gezeigten Ausgestaltung sind hierzu die Klingen 58 des Trennwerkzeugs 50 federnd miteinander verbunden, nämlich derart, dass zwei in Umlaufrichtung der Walze 22a, g benachbarte Klingen 58 mittels einer Feder 60 verbunden sind. Entlang der Drehachse A verläuft eine Einstellschraube 62, auf welcher ein Einstellkegel 64 in Querrichtung Q gleitend gelagert ist. Der Einstellkegel 64 drückt von innen und in radialer Richtung, d.h. senkrecht zur Drehachse A, nach außen gegen die Klingen 58, welche gegen eine Mantelfläche des Einstellkegels 64 gelagert sind. Damit ist ein Einstellmechanismus realisiert, bei welchem durch Drehen der Einstellschraube 62 der Einstellkegel 64 in Querrichtung Q durch die Walze 22a, g verschoben wird und je nach Drehrichtung der Einstellschraube 62 dann die Klingen 58 in radialer Richtung weiter aus der Walze 22a, g hinaustreibt oder diese durch die Federn 60 in die Walze 22a, g einfahren lässt, sodass im Ergebnis die Schnitttiefe einstellbar ist.

Die hier gezeigten Walzen 22a, g sind jeweils zugleich als eine Querzugwalze und als eine Schneidwalze ausgebildet ist, wobei dann das Trennwerkzeug 50 in einen Querabschnitt der Walze 22a, b integriert ist, welcher die Querzugspannung F4 erzeugt. Auf diese Weise wird beim jeweiligen Zerteilen mittels des Trennwerkzeugs 50 automatisch eine Querzugspannung F4 ausgeübt und dadurch die Gratbildung und auch Faltenbildung beim Zerteilen verringert. In Kombination mit der Mantelfläche M aus Gummi ergibt sich eine Ausgestaltung, bei welcher das Gummi beim Kontakt mit der Elektrodenbahn 4 zunächst komprimiert wird und dadurch dann die Klingen 58 des Trennwerkzeugs 50 freigibt, welche dann die Elektrodenbahn 4 unter optimaler Querzugspannung F4 zerteilen. Dieses Freigeben des Messers bei einer Kompression der Mantelfläche ist in den lediglich schematischen Figuren nicht explizit dargestellt. Die Schnitttiefe und die Dicke des Gummis sind hierbei auf die Dicke d1, d2 der Trägerschicht 6 und des Elektrodenmaterials 8 angepasst. Die Walze 22b bildet eine Gegenwalze für die Walze 22a und einer der Kalanderwalzen 24 bildet entsprechend eine Gegenwalze für die Walze 22g, sodass das jeweilige Trennwerkzeug 50 über die jeweilige Gegenwalze abrollt, wodurch ist ein Keilschneiden realisiert ist.

### Bezugszeichenliste

- 2: Bearbeitungsvorrichtung
- 4: Elektrodenbahn
- 6: Trägerschicht
- 8: Elektrodenmaterial
- 10: Materialbereich
- 12: Freibereich
- 14: Ableiter
- 16: Elektrode
- 18: Abwickler
- 20: Kalander
- 22a - i: Walze
- 24: Kalanderwalze
- 26: Aufwickler
- 28: Falte
- 30: Teilbahn
- 32: Zwischenbereich
- 34: Messer, Obermesser
- 36: Messer, Untermesser
- 38: Bahnzufuhr
- 40: Bahnaufnahme
- 42: Gegenwalze (der Bahnzufuhr)
- 44: Gegenwalze (der Bahnaufnahme)
- 46: Innenabschnitt
- 48: Außenabschnitt
- 50: Trennwerkzeug
- 52: Unterstützungswalze
- 54: Querabschnitt
- 56: Erhebung oder Vertiefung
- 58: Klinge
- 60: Feder
- 62: Einstellschraube
- 64: Einstellkegel
- 66: Steg
- 68: Antrieb

- A: Drehachse
- A1: Höhe oder Tiefe (der Erhebung bzw. Vertiefung)
- A2: Breite (der Erhebung oder Vertiefung)
- A3: Länge (der Erhebung oder Vertiefung)
- B1: erste Bearbeitungsstufe
- B2: zweite Bearbeitungsstufe
- B3: dritte Bearbeitungsstufe
- B4: vierte Bearbeitungsstufe
- B5: Reinigungsstufe
- d1: Dicke (der Trägerschicht)
- d2: Dicke (des Elektrodenmaterials)
- d3: Dicke (der Elektrodenbahn)
- dF: Längsspannungsunterschied
- F: Förderrichtung
- F1: Bahnspannung
- F1': Längszugspannung
- F2: Druckspannung
- F3: negative/positive Dehnung in Querrichtung
- F4: Querzugspannung
- F5: Längszugspannung (durch Walze)
- M: Mantelfläche
- Q: Querrichtung
- W: Anstellwinkel

## Patentansprüche

1. Verfahren zur Bearbeitung einer Elektrodenbahn (4),
- wobei die Elektrodenbahn (4) eine Trägerschicht (6) aufweist und ein Elektrodenmaterial (8), welches lediglich in einem Materialbereich (10) der Elektrodenbahn (4) auf die Trägerschicht (6) aufgetragen ist, sodass ein Freibereich (12) verbleibt, welcher frei ist von Elektrodenmaterial (8), zur Ausbildung von Ableitern (14),
- wobei die Elektrodenbahn (4) in einer Förderrichtung (F) durch eine Bearbeitungsvorrichtung (2) geführt wird, sodass der Materialbereich (10) und der Freibereich (12) nebeneinander verlaufen,
- wobei die Bearbeitungsvorrichtung (2) einen Kalander (20) aufweist, durch welchen die Elektrodenbahn (4) geführt wird und mit welchem der Materialbereich (10) kalandriert wird,
- wobei die Bearbeitungsvorrichtung (2) zusätzlich zumindest eine Walze (22a - i) aufweist, welche derart ausgebildet ist, dass diese auf die Elektrodenbahn (4) eine Querzugspannung (F4) ausübt.

2. Verfahren nach Anspruch 1,
wobei die Walze (22a - i) zum Ausüben der Querzugspannung (F4) eine Mantelfläche (M) aufweist, welche ganz oder teilweise aus einem Gummi hergestellt ist.

3. Verfahren nach einem der Ansprüche 1 oder 2,
wobei die Walze (22a - i) zum Ausüben der Querzugspannung (F4) eine texturierte Mantelfläche (M) aufweist.

4. Verfahren nach einem der Ansprüche 1 bis 3,
wobei die Walze (22a - i) zum Ausüben der Querzugspannung (F4) schraubenförmig ausgebildet ist.

5. Verfahren nach einem der Ansprüche 1 bis 4,
wobei der Kalander (20) in Förderrichtung einen Längsspannungsunterschied (dF) zwischen dem Freibereich (12) und dem Materialbereich (10) erzeugt,
wobei die Walze (22a - i) zusätzlich zu der Querzugspannung (F4) noch eine Längszugspannung (F5) ausübt, sodass der Längsspannungsunterschied (dF) ausgeglichen wird.

6. Verfahren nach Anspruch 5,
wobei die Walze (22a - i) zum Ausüben der Längszugspannung (F5) einen Antrieb (68) aufweist.

7. Verfahren nach einem der Ansprüche 1 bis 6,
wobei in die oder eine weitere Walze (22a) ein Trennwerkzeug (50) integriert ist, mittels welchem die Trägerschicht (6) im Freibereich (12) derart zerteilt wird, dass wiederkehrend Ableiter (14) ausgebildet werden.

8. Verfahren nach einem der Ansprüche 1 bis 7,
wobei in die oder eine weitere Walze (22g) ein Trennwerkzeug (50) integriert ist, mittels welchem die Elektrodenbahn (4) im Materialbereich (10) und entlang der Förderrichtung (F) derart zerteilt wird, dass mehrere Teilbahnen (30) ausgebildet werden, welche nebeneinander verlaufen.

9. Verfahren nach einem der Ansprüche 1 bis 8,
wobei die Bearbeitungsvorrichtung (2) eine erste Bearbeitungsstufe (B1) aufweist, mit der Walze (22a), welche derart ausgebildet ist, dass diese am Freibereich (12) angreift und in diesem die Querzugspannung (F4) ausübt und zugleich im Freibereich (12) wiederkehrend Ableiter (14) ausbildet.

10. Verfahren nach einem der Ansprüche 1 bis 9,
wobei die Bearbeitungsvorrichtung (2) eine zweite Bearbeitungsstufe (B2) aufweist, welche zwei Kalanderwalzen (24) des Kalanders (20) auf gegenüberliegenden Seiten der Elektrodenbahn (4) aufweist, zum Verdichten des Elektrodenmaterials (8),
wobei die Bearbeitungsvorrichtung (2) vier Walzen (22c, d, e, f) derart aufweist, dass eine jeweilige der beiden Kalanderwalzen (24) in Querrichtung (Q) beidseitig von zwei der vier Walzen (22c - f) eingefasst ist und mit diesen eine gemeinsame Drehachse (A) aufweist,
wobei die vier Walzen (22c - f) jeweils lediglich in einem Freibereich (12) wirken und dort eine Querzugspannung (F4) ausüben.

11. Verfahren nach einem der Ansprüche 1 bis 10,
wobei die Bearbeitungsvorrichtung (2) eine dritte Bearbeitungsstufe (B3) aufweist, mit der oder einer weiteren Walze (22g),
- in welche ein Trennwerkzeug (50) integriert ist, zur Bearbeitung der Elektrodenbahn (4) derart, dass diese mittels des Trennwerkzeugs (50) zerteilt wird, und
- welche zugleich derart ausgebildet ist, dass diese am Materialbereich (10) angreift und in diesem eine Querzugspannung (F4) ausübt.

12. Verfahren nach Anspruch 11,
wobei die Bearbeitungsvorrichtung (2) eine vierte Bearbeitungsstufe (B4) aufweist,
- welche auf die dritte Bearbeitungsstufe (B3) folgt, und
- welche zwei Kalanderwalzen (24) des Kalanders (20) auf gegenüberliegenden Seiten der Elektrodenbahn (4) aufweist, zum Verdichten des Elektroden-materials (8).

13. Bearbeitungsvorrichtung (2), welche ausgebildet ist zur Durchführung eines Verfahrens gemäß einem der Ansprüche 1 bis 12.
